(19)

Europäisches Patentamt

European Patent Office

Office européen des brevets

(11) **EP 4 435 298 A1**

(12) **EUROPEAN PATENT APPLICATION**
published in accordance with Art. 153(4) EPC

(43) Date of publication:
**25.09.2024 Bulletin 2024/39**

(21) Application number: **22915831.6**

(22) Date of filing: **20.12.2022**

(51) International Patent Classification (IPC):
*F16J 9/20* (2006.01)   *F02F 5/00* (2006.01)
*F16J 9/06* (2006.01)

(52) Cooperative Patent Classification (CPC):
**F02F 5/00; F16J 9/06; F16J 9/20**

(86) International application number:
**PCT/JP2022/046957**

(87) International publication number:
**WO 2023/127607 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021 JP 2021214413**

(71) Applicant: **Kabushiki Kaisha Riken
Tokyo 102-8202 (JP)**

(72) Inventor: **YAMADA, Takeshi
Kashiwazaki-shi, Niigata 945-8555 (JP)**

(74) Representative: **Arnold & Siedsma
Bezuidenhoutseweg 57
2594 AC The Hague (NL)**

(54) **PISTON RING AND PISTON RING SET**

(57)   A piston ring includes an annular main body portion having an inner peripheral surface, an outer peripheral surface, and one side surface and the other side surface substantially orthogonal to the inner peripheral surface. The piston ring includes a first curved surface provided on a side of the one side surface of the outer peripheral surface, the first curved surface being convexly curved outwards in a radial direction of the main body portion, a second curved surface provided on a side of the other side surface of the outer peripheral surface, the second curved surface being convexly curved outwards in the radial direction of the main body portion, and an intermediate surface formed to extend in a direction connecting the one side surface to the other side surface connecting the first curved surface to the second curved surface. The intermediate surface has a flat portion formed in at least a part thereof. The width of the intermediate surface in the direction connecting the one side surface to the other side surface is 0.05 mm or more and 0.30 mm or less.

*Fig.2*

## Description

## Technical Field

The present disclosure relates to a piston ring and a piston ring set used in an internal combustion engine or the like.

## Background Art

A piston ring used in an internal combustion engine of an automobile or the like is provided in, for example, a ring groove on an outer peripheral surface of a piston and slides on an inner wall of a cylinder. The piston ring has a gas sealing function between the combustion chamber side and the crank chamber side and a function of reducing an oil consumption amount. As such a piston ring, for example, a piston ring described in Patent Literature 1 is known. In the technique described in Patent Literature 1, polishing is performed so that outer peripheral surface roughness of the piston ring is equal to or less than a predetermined value, and an oil consumption amount in the initial operation is reduced.

## Citation List

## Patent Literature

Patent Literature 1: Japanese Unexamined Patent Publication No. H06-011038

## Summary of Invention

## Technical Problem

In order to improve fuel efficiency of an internal combustion engine, studies have been made on reducing friction loss between a piston ring and a cylinder. In order to achieve a reduction in friction, it is important to devise the shape of the outer peripheral surface of the piston ring while considering the influence on an oil consumption amount. However, there is room for a further reduction in friction at the initial stage of starting use of the piston ring.

An object of the present disclosure is to provide a piston ring and a piston ring set capable of achieving a further reduction in friction at the initial stage of starting use of the piston ring.

## Solution to Problem

In order to solve the above problems, the present inventors have conducted intensive studies. As a result, the present inventor has found that a minute wedge-shaped space formed between a piston ring and a cylinder is important for achieving a reduction in friction at the initial stage of starting use of the piston ring. The inventor of the present invention has found the shape of the outer peripheral surface of the piston ring that achieves a further reduction in friction.

A piston ring according to one aspect of the present disclosure is a piston ring including an annular main body portion having an inner peripheral surface, an outer peripheral surface, and one side surface and the other side surface substantially orthogonal to the inner peripheral surface, the piston ring including a first curved surface provided on a side of the one side surface of the outer peripheral surface, the first curved surface being convexly curved outwards in a radial direction of the main body portion, a second curved surface provided on a side of the other side surface of the outer peripheral surface, the second curved surface being convexly curved outwards in the radial direction of the main body portion, and an intermediate surface formed to extend in a direction connecting the one side surface to the other side surface so as to connect the first curved surface to the second curved surface, in which the intermediate surface has a flat portion formed in at least a part thereof, and a width of the intermediate surface in the direction connecting the one side surface to the other side surface is 0.05 mm or more and 0.30 mm or less.

In the piston ring according to one aspect of the present disclosure, the intermediate surface having the flat portion formed in at least a part thereof is formed so as to connect the first curved surface to the second curved surface. The width of the intermediate surface in the direction connecting the one side surface to the other side surface is 0.05 mm or more and 0.30 mm or less. In such a configuration, minute wedge-shaped spaces are respectively formed between the first curved surface near the intermediate surface in the piston ring and a cylinder and between the second curved surface near the intermediate surface in the piston ring and the cylinder. By providing the intermediate surface having a length of 0.05 mm or more and 0.30 mm or less, a reduction in friction loss due to conformable sliding at the initial stage of starting use of the piston ring is promoted. Therefore, the minute wedge-shaped space is easily formed. As a result, it is possible to further reduce friction at the initial stage of starting use of the piston ring.

In one embodiment, the flat portion may have a width dimension of 50% or more of the width of the intermediate surface in the direction.

In one embodiment, at least one of a first wedge angle and a second wedge angle may be 1.5° or less, in which the first wedge angle is an angle formed between the intermediate surface and a first virtual line in contact with the first curved surface at a first boundary between the first curved surface and the intermediate surface, and the second wedge angle is an angle formed between the intermediate surface and a second virtual line in contact with the second curved surface at a second boundary between the second curved surface and the intermediate surface.

In one embodiment, an outermost portion of the intermediate surface, the outermost portion being located at an outermost side in the radial direction, may be disposed closer to the side of the one side surface than a center portion of the intermediate surface in the direction.

In one embodiment, an outermost portion of the intermediate surface, the outermost portion being located at an outermost side in the radial direction, may be disposed closer to the side of the other side surface than a center portion of the intermediate surface in the direction.

In one embodiment, the piston ring may further include an inner cut surface extending obliquely relative to the direction so as to connect the one side surface to the inner peripheral surface.

In one embodiment, a torsion angle of the piston ring in a predetermined cylinder mounting state may be 5 to 90 arcminute.

According to another aspect of the present disclosure, there is provided a piston ring set including the piston ring, and an oil control ring including a pair of side rails and a spacer expander disposed between the pair of side rails, in which the side rail has an outer peripheral surface, an inner peripheral surface, a first side surface, and a second side surface, the inner peripheral surface has a vertically symmetrical shape in a cross section in an axial direction, and the inner peripheral surface of the side rail has an inner tip portion satisfying a following condition A1 in the cross section in the axial direction.

$$\text{Condition A1: } 0.7 \leq R1/Lh0 \leq 1.1$$

In a formula, R1 represents a radius of curvature (unit: mm) of a curve forming the inner tip portion, and Lh0 represents a height (unit: mm) of the side rail. It is noted that the contour shape of the side rail (the shape of the inner peripheral surface, the outer peripheral surface, and the like) can be measured using a contour shape measuring machine (for example, manufactured by ACCRETECH (TOKYO SEIMITSU CO., LTD.)).

In the piston ring set according to another aspect of the present disclosure, the inner peripheral surface has the vertically symmetrical shape in the cross section in the axial direction, and the inner peripheral surface of the side rail has the inner tip portion satisfying the condition A1. According to the study of the present inventors, since the inner tip portion of the inner peripheral surface of the side rail satisfies the condition A1, an oil consumption amount can be sufficiently suppressed even when an internal combustion engine is operated at a high rotation speed. This is presumed to be because a behavior of the side rail during high-speed operation is stabilized, the side surface of the side rail easily abuts on the inner surface of a piston groove and, as such, sealing performance is improved. The behavior of the side rail is affected by frictional force with a cylinder and inertial force accompanying reciprocation. It is presumed that the influence of inertial force is dominant over the influence of frictional force because an increase in the speed of reciprocation increases inertial force applied to an oil control ring. When the inner tip portion satisfies the condition A1, the center of gravity is shifted to the inner peripheral surface side as compared with a conventional side rail, and a position in contact with an ear portion of a spacer expander is shifted. It is presumed that these matters contribute to stabilization of the behavior of the side rail. Therefore, it is possible to sufficiently suppress an increase in an oil consumption amount even when the internal combustion engine is operated at a high rotation speed by the oil control ring while achieving a further reduction in friction at the initial stage of starting use of the piston ring by the piston ring.

In one embodiment, the spacer expander may include a plurality of ear portions and a plurality of rail facing portions, the ear portions abutting on the inner peripheral surface of the side rail, each of the rail facing portions being provided adjacent to a corresponding one of the ear portions and facing the side surface of the side rail, and all or at least a part of the plurality of ear portions may satisfy a following condition B1.

$$\text{Condition B1: } W/H \geq 1.5$$

Here, in a formula, W represents a width (unit: mm) of each of the ear portions at a position moved by 0.05 mm from a highest position of each of the ear portions in a direction of a corresponding one of the rail facing portions, and H represents a height difference (unit: mm) between a highest position of a region in each of the rail facing portions, the region being adjacent to the corresponding one of the ear portions, and the highest position of each of the ear portions. In this case, the spacer expander having the ear portion having a value of W/H of 1.5 or more can suppress a wear amount of the ear portion as compared with the spacer expander having a value of W/H less than 1.5. Since a dimension ratio of the height of the ear portion to the width of the ear portion is limited, strength and workability of the ear portion are improved. An upper limit value of the value of W/H is, for example, 5.0 from the viewpoint of tension generated in the spacer expander.

According to a piston ring set according to still another aspect of the present disclosure, an increase in an oil consumption amount can be suppressed by the oil control ring while achieving a further reduction in friction by the piston ring at the initial stage of starting use of the piston ring.

**Advantageous Effects of Invention**

According to the present disclosure, it is possible to achieve a further reduction in friction at the initial stage of starting use of a piston ring.

## Brief Description of Drawings

FIG. 1 is a perspective view of a piston ring according to an embodiment.

FIG. 2 is a cross-sectional view taken along line II-II in FIG. 1.

FIG. 3 is an enlarged view of a main part of the cross section of FIG. 2.

FIG. 4 is a table illustrating a relationship between an intermediate surface width and a wedge angle.

FIG. 5 is a graph illustrating a relationship between the intermediate surface width and the wedge angle in FIG. 4.

FIG. 6 is a cross-sectional view of a piston ring according to a modification in FIG. 2.

FIG. 7 is a table illustrating friction measurement results of piston rings according to examples and comparative examples.

FIG. 8(a) is a graph illustrating the friction measurement results of FIG. 7, in which a horizontal axis of the graph represents a wedge angle. FIG. 8(b) is a graph illustrating the friction measurement results of FIG. 7, in which a horizontal axis of the graph represents an intermediate surface width.

FIG. 9 is a graph illustrating time-series changes in friction of piston rings according to the examples and the comparative example.

FIG. 10 is a cross-sectional view schematically illustrating a state in which an example of a 3-piece oil control ring is installed in a piston groove.

FIG. 11(a) is a perspective view of a side rail in FIG. 10.

FIG. 11(b) is a cross-sectional view taken along line b-b in FIG. 11(a).

FIG. 12 is an enlarged cross-sectional view illustrating an inner peripheral side of the side rail in FIG. 11.

FIG. 13 is an enlarged cross-sectional view illustrating an outer peripheral side of the side rail in FIG. 11.

FIG. 14 is an enlarged cross-sectional view illustrating another example of the inner peripheral surface of the side rail.

FIG. 15 is a plan view illustrating a first example of a spacer expander.

FIG. 16 is an enlarged perspective view illustrating a region surrounded by an alternate long and short dash line in FIG. 15.

FIG. 17 is a perspective view partially illustrating a second example of the spacer expander.

FIG. 18 is a perspective view partially illustrating a third example of the spacer expander.

FIGS. 19(a) and 19(b) are cross-sectional views of the spacer expander illustrated in FIG. 18 and a side rail installed on the spacer expander, and are cross-sectional views illustrating different aspects of the spacer expander.

FIG. 20 is a perspective view partially illustrating a fourth example of the spacer expander.

FIG. 21 is a perspective view partially illustrating a fifth example of the spacer expander.

FIG. 22 is a perspective view partially illustrating a sixth example of the spacer expander.

FIG. 23(a) is a view illustrating an example of an ear portion having a convex portion on a surface on which the inner peripheral surface of the side rail abuts. FIG. 23(b) is a cross-sectional view taken along line A-A in FIG. 23(a), and is a cross-sectional view illustrating an aspect in which the convex portion is high. FIG. 23(c) is a cross-sectional view taken along line A-A in FIG. 23(a), and FIG. 23(c) is a cross-sectional view illustrating an aspect in which the convex portion is low.

FIG. 24(a) is a view illustrating a width W of an ear portion of the present disclosure. FIG. 24(b) is a view illustrating a width W of an ear portion of a comparative example.

FIG. 25(a) is a view illustrating a height H of an ear portion illustrated in FIG. 16. FIG. 25(b) is a view illustrating a height H of an ear portion illustrated in FIG. 17. FIG. 25(c) is a view illustrating a height H of an ear portion illustrated in FIG. 18. FIG. 25(d) is a view illustrating a height H of an ear portion illustrated in FIG. 20. FIG. 25(e) is a view illustrating a height H of an ear portion illustrated in FIG. 21. FIG. 25(f) is a view illustrating a height H of an ear portion illustrated in FIG. 22.

## Description of Embodiments

Hereinafter, embodiments of the present disclosure will be described with reference to the drawings. In the following description, the same or equivalent elements are denoted by the same reference numerals, and a redundant description is omitted.

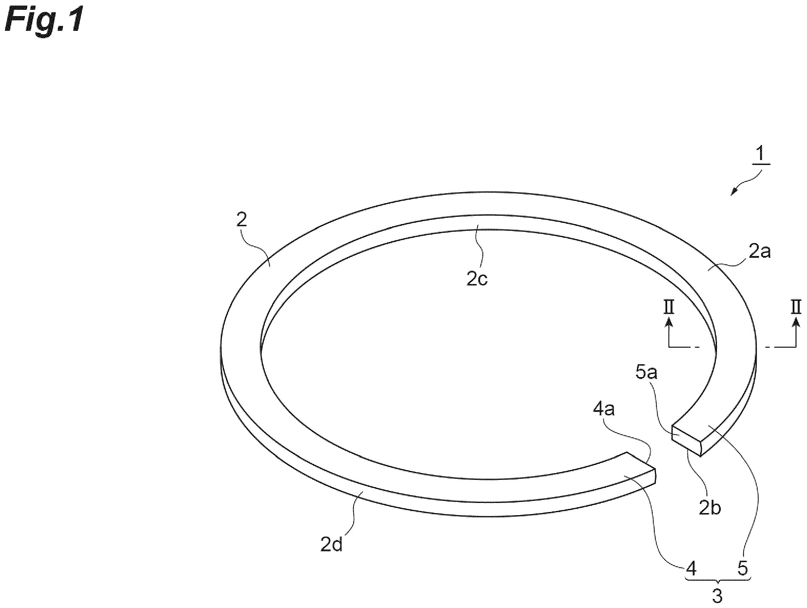

FIG. 1 is a perspective view of a piston ring according to an embodiment. A piston ring 1 illustrated in FIG. 1 is used as, for example, a second ring provided in a ring groove of the piston outer peripheral surface in an internal combustion engine of an automobile. The piston ring 1 slides on an inner wall of a cylinder to achieve a gas sealing function between the combustion chamber side and the crank chamber side and a function of reducing an oil consumption amount.

The piston ring 1 includes an annular main body portion 2 and an abutment portion 3 formed in a part of the main body portion 2. The main body portion 2 has a pair of a side surface (one side surface) 2a and a side surface (the other side surface) 2b, an inner peripheral surface 2c, and an outer peripheral surface 2d. The side surfaces 2a and 2b are substantially orthogonal to the inner peripheral surface 2c. In the following description, a direction connecting the side surface 2a to the side surface 2b is defined as a width direction of the piston ring 1, and a direction connecting the inner peripheral surface 2c to the outer peripheral surface 2d is defined as a thickness direction of the piston ring 1. The width direction of the piston ring 1 corresponds to the axial direction of the piston ring 1.

The main body portion 2 has a substantially rectangular cross section in which the thickness direction is a long side and the width direction is a short side. The main body portion 2 is made of, for example, cast iron or steel containing a plurality of metal elements, and is formed to have sufficient strength, heat resistance, and elasticity.

The surface of the main body portion 2 may be subjected to surface modification to form a hard film. The hard film is, for example, a physical vapor deposition film (PVD film) formed using physical vapor deposition (PVD method). Thus, the hard film can be formed with sufficient hardness. The hard film is an ion plating film containing at least one of titanium (Ti) and chromium (Cr) and at least one of carbon (C), nitrogen (N), and oxygen, or a diamond-like carbon film. As a specific example, the hard film is a titanium nitride film, a chromium nitride film, a titanium carbonitride film, a chromium carbonitride film, a chromium oxynitride film, a chromium film, or a titanium film. Among those films, the chromium nitride film may be used when wear resistance and scuff resistance are emphasized. The hard film may be a multilayer body, and may include, for example, a chromium nitride film, a diamond-like carbon film, and the like.

The abutment portion 3 is a portion at which a part of the main body portion 2 is divided, and is formed by a pair of abutment end portions 4 and 5 facing each other. Each of the pair of abutment end portions 4 and 5 is a free end portion of the main body portion 2. For example, a gap (an abutment gap) of the abutment portion 3 becomes narrowed when the piston ring 1 is heated and thermally expanded. When the piston ring 1 is in use, the abutment portion 3 functions as a relief part for thermal expansion of the main body portion 2, in which the thermal expansion is caused by a temperature difference between the piston ring 1 and the cylinder.

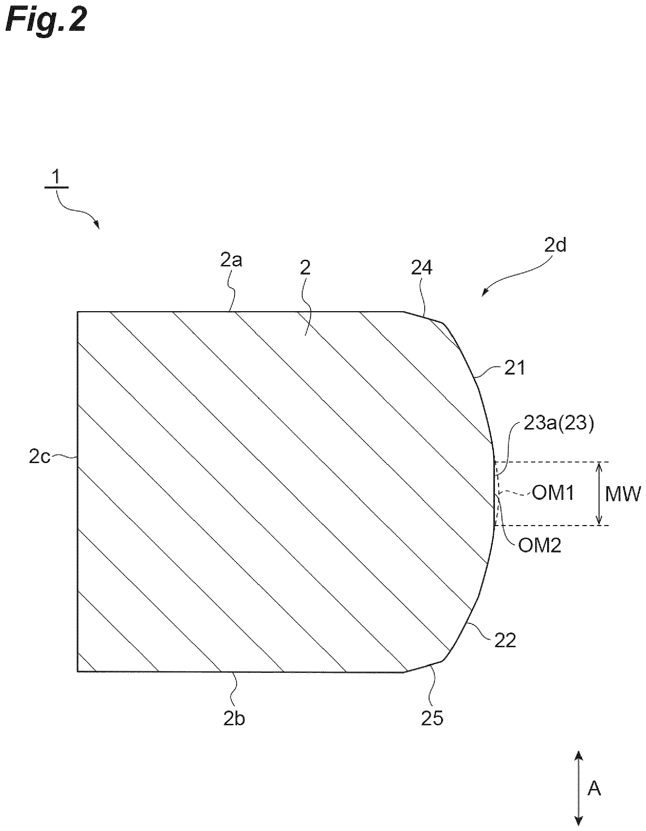

Next, the outer peripheral surface 2d of the main body portion 2 will be described in more detail. FIG. 2 is a cross-sectional view taken along line II-II in FIG. 1. The shape of the line in the following description means the shape of the line in the cross-sectional view of FIG. 2 unless otherwise specified.

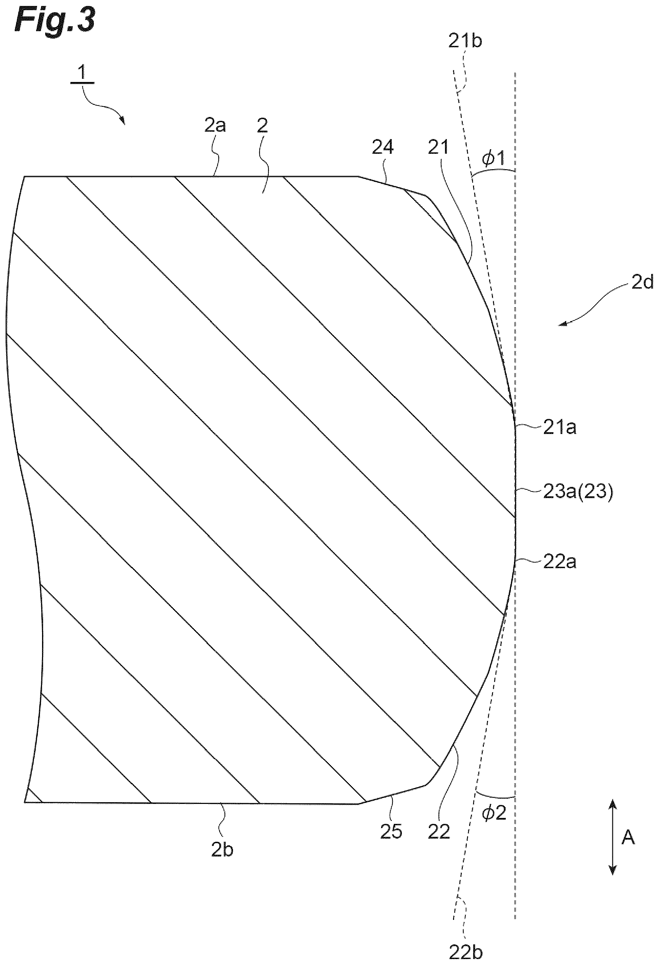

As illustrated in FIGS. 2 and 3, the outer peripheral surface 2d is provided with, for example, a first curved surface 21, a second curved surface 22, an intermediate surface 23, a first connection surface 24, and a second connection surface 25.

The first curved surface 21 is a curved surface convexly curved outwards in the radial direction of the main body portion 2 on the side surface 2a side of the outer peripheral surface 2d. The first curved surface 21 here extends from an end portion on the side surface 2a side of the intermediate surface 23 to be described later toward the side surface 2a to an end portion on the side surface 2b side of the first connection surface 24 to be described later. For example, when the first connection surface 24 is omitted, the first curved surface 21 may extend to the outer end portion in the radial direction of the side surface 2a. The first curved surface 21 is curved, for example, in a circular arc shape. The shape of the first curved surface 21 is not limited to this example. The shape of the first curved surface 21 may be curved in a shape different from the circular arc shape. The shape of the first curved surface 21 may partially include a straight line.

The second curved surface 22 is a curved surface convexly curved outwards in the radial direction of the main body portion 2 on the side surface 2b side of the outer peripheral surface 2d. The second curved surface 22 here extends from an end portion on the side surface 2b side of the intermediate surface 23 to be described later toward the side surface 2b to an end portion on the side surface 2a side of the second connection surface 25 to be described later. For example, when the second connection surface 25 is omitted, the second curved surface 22 may extend to the outer end portion in the radial direction of the side surface 2b. The second curved surface 22 is curved, for example, in a circular arc shape. The shape of the second curved surface 22 is not limited to this example. The shape of the first curved surface 21 may be curved in a shape different from the circular arc shape. The shape of the first curved surface 21 may partially include a straight line.

Each of the first curved surface 21 and the second curved surface 22 is curved in a circular arc shape. The first curved surface 21 and the second curved surface 22 may be a circular arc overlapping a part of a common virtual circle. For example, the center of the virtual circle may be located between the side surface 2a and the side surface 2b. In this case, a virtual outermost portion OM1, which is the outermost portion of the virtual circle in the radial direction of the piston ring 1, is located at the center in a width direction (direction) A connecting the side surface 2a to the side surface 2b of the piston ring 1. The first curved surface 21 and the second curved surface 22 are parts of a symmetrical barrel shape symmetrical in the width direction A with the outermost point of the virtual circle as a boundary.

The barrel shape means a curved surface that is convexly curved outwards in the radial direction of the piston ring 1 and includes the outermost portion in the radial direction of the piston ring 1. The barrel shape includes a symmetrical barrel shape and an eccentric barrel shape. The symmetrical barrel shape is a barrel shape, and means a curved surface in which the outermost portion of the piston ring 1 in the radial direction is located at the center of the outer peripheral surface 2d in the width direction A. The eccentric barrel shape is a barrel shape, and means a curved surface in which the outermost portion of the piston ring 1 in the radial direction is located below (closer to a crank chamber) the center of the outer peripheral surface 2d in the width direction A.

The size of the common virtual circle can be defined by a virtual height dimension in the radial direction of the piston ring 1 between a point at a certain distance from the virtual outermost portion OM1 in the width direction A and the position of the virtual outermost portion OM1. The points separated from the virtual outermost portion OM1 by a certain distance in the width direction A may be, for example, respective points each separated by 0.25 mm vertically. The virtual height dimension means a virtual droop amount. The virtual droop amount may be, for example, 0.001 mm or more and 0.008 mm or less. The virtual droop amount may be set according to a width of the intermediate surface 23 to be described later.

Here, the outer peripheral surface 2d is provided with the intermediate surface 23 between the first curved surface 21 and the second curved surface 22. The intermediate surface 23 is a contact surface with a cylinder inner wall including a portion of the outer peripheral surface 2d that protrudes most outwards in the radial direction. The intermediate surface 23 slides in contact with the inner wall of the cylinder when the piston ring 1 is installed in the ring groove of the piston. The intermediate surface 23 extends in the width direction A so as to connect the first curved surface 21 to the second curved surface 22. The intermediate surface 23 has an upper end portion that is continuous with the first curved surface 21 and a lower end portion that is continuous with the second curved surface 22. The intermediate surface 23 here is substantially orthogonal to the side surfaces 2a and 2b and substantially parallel to the inner peripheral surface 2c. The intermediate surface 23 extends over the entire circumferential direction in the circumferential direction of the main body portion 2.

A width (an intermediate surface width MW) of the intermediate surface 23 in the width direction A is 0.05 mm or more and 0.30 mm or less. The intermediate surface width MW in the width direction A may be 0.05 mm or more and 0.25 mm or less. The intermediate surface width MW in the width direction A may be 0.05 mm or more and 0.20 mm or less.

The intermediate surface 23 has a flat portion 23a formed in at least a part thereof. The flat portion 23a is a portion of the intermediate surface 23, in which the portion is linear in a cross-sectional view orthogonal to the circumferential direction of the main body portion 2. Here, the flat portion 23a is orthogonal to the side surfaces 2a and 2b and parallel to the inner peripheral surface 2c. The flat portion 23a is a straight line parallel to the axial direction of the piston ring 1 in a cross-sectional view orthogonal to the circumferential direction of the main body portion 2. The axial direction of the piston ring 1 corresponds to the width direction A. The flat portion 23a is provided over the entire circumferential direction of the piston ring 1 in the circumferential direction. The flat portion 23a has a virtual cylindrical shape as a whole in a state in which the abutment portions 3 are close to each other.

In such a flat portion 23a, an intermediate outermost portion (outermost portion) OM2 located on the outermost side in the radial direction in the intermediate surface 23 is the entire flat portion 23a. The intermediate outermost portion OM2 is located radially inside a virtual shape obtained by virtually extending the first curved surface 21 and the second curved surface 22 outwards in the radial direction. Here, the intermediate outermost portion OM2 is located radially inside the virtual outermost portion OM1 of the virtual circle described above. Therefore, the outer peripheral surface 2d is different from a general symmetrical barrel shape. In the outer peripheral surface 2d, a degree of point contact (line contact in the circumferential direction) of the apex of the curved surface in the cross-sectional view is reduced at the initial stage of starting use of the new piston ring 1. The outer peripheral surface 2d rather facilitates formation of a minute wedge shape between the piston ring 1 and the cylinder inner wall.

The flat portion 23a has a flat portion width dimension of 50% or more of the intermediate surface width MW in the width direction A. The flat portion width dimension may be 70% or more of the intermediate surface width MW. The flat portion width dimension may be 80% or more of the intermediate surface width MW. Here, for example, the flat portion 23a extends linearly parallel to the width direction A in the entire intermediate surface width MW. That is, the flat portion width dimension here is 100%. In this case, the flat portion width dimension is equal to the intermediate surface width MW in the width direction A, and is 0.05 mm or more and 0.30 mm or less. The flat portion width dimension may be 0.05 mm or more and 0.25 mm or less. The flat portion width dimension may be 0.05 mm or more and 0.20 mm or less.

The above-described virtual height dimension, intermediate surface width MW, and flat portion width dimension can be obtained by measuring the shape of the outer peripheral surface 2d of the piston ring 1 using a commercially available contour shape measuring machine. As a contour shape measuring machine, for example, ACCRETECH (TOKYO SEIMITSU CO., LTD.) SURFCOM 1900DX3 can be used.

FIG. 3 is an enlarged view of a main part of the cross section of FIG. 2. As an index of the dimension of the intermediate surface width MW, wedge angles at the opposite end portions of the intermediate surface 23 in the width direction A can be used. The wedge angle is an angle formed between a tangent line of the outer peripheral surface 2d and the intermediate surface 23 at the opposite end portions of the intermediate surface 23 in the width direction A. As a specific example, the wedge angle includes a first wedge angle $\varphi 1$, which is an angle formed between the intermediate surface 23 and a first virtual line 21b in contact with the first curved surface 21 at a first boundary 21a between the first curved surface 21 and the intermediate surface 23, and a second wedge angle $\varphi 2$, which is an angle formed between the intermediate surface 23 and a second virtual line 22b in contact with the second curved surface 22 at a second boundary 22a between the second curved surface 22 and the intermediate surface 23. The wedge angle corresponds to an oil introduction angle between the piston ring 1 and the cylinder inner wall.

The wedge angle may be calculated by geometric calculation from design dimensions. The wedge angle may be calculated using a measurement result of the contour shape measuring machine. In the case of using the contour shape measuring machine, the wedge angle may be calculated by geometric calculation from a dimension obtained by enlarging a measurement result, or may be calculated using calculation software such as a dimension on a contour image provided in the contour shape measuring machine. When the calculation software is used, the wedge angle can be calculated from the tangent angle between the radius of curvature of the virtual circle and the intermediate surface 23. A method of calculating the wedge angle is not particularly limited.

Here, since the intermediate surface 23 is disposed at a center portion of the outer peripheral surface 2d in the width direction A, a center portion of the intermediate surface 23 is located at the center portion of the outer peripheral surface 2d in the width direction A. The intermediate surface 23 is symmetrical in the width direction A with a center portion of the outer peripheral surface 2d in the width direction A as a boundary. Therefore, the first wedge angle φ1 and the second wedge angle φ2 are equal to each other. The "equal to each other" may not include a dimensional difference due to a component tolerance and a measurement error. The "equal to each other" may mean geometrically equal to each other.

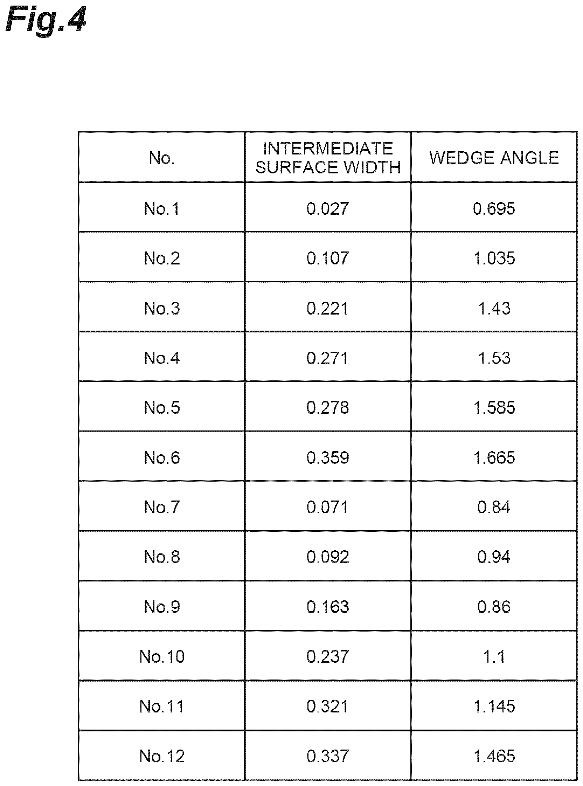

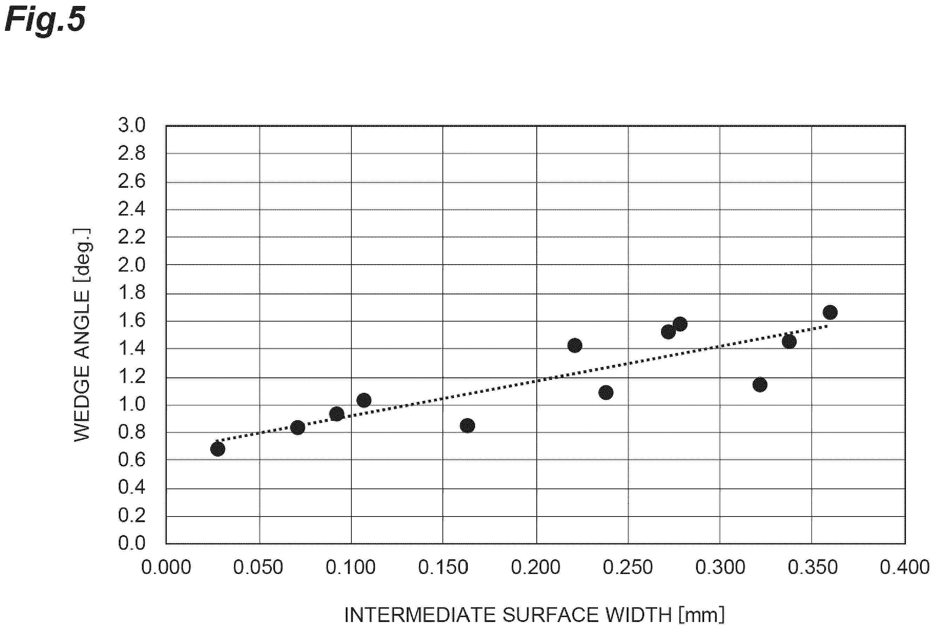

In the configuration of the flat portion 23a as described above, each of the first wedge angle φ1 and the second wedge angle φ2 is 1.5° or less. FIG. 4 is a table illustrating a relationship between the intermediate surface width and the wedge angle. FIG. 5 is a graph illustrating a relationship between the intermediate surface width and the wedge angle in FIG. 4. In FIG. 4, wedge angles calculated in the piston rings 1 having 12 kinds of intermediate surface widths MW are shown as tables. In FIG. 5, the horizontal axis represents the intermediate surface width MW, and the vertical axis represents the wedge angle. As shown in FIG. 5, it can be seen that the wedge angle tends to increase as the intermediate surface width MW increases. Therefore, it can be seen that the wedge angle can be used as an index of the dimension of the intermediate surface width MW.

For example, the intermediate surface width MW in the width direction A of the piston ring 1 is 0.05 mm or more and 0.30 mm or less. Therefore, according to FIGS. 4 and 5, the wedge angles (the first wedge angle φ1 and the second wedge angle φ2) may be, for example, 0.6 or more and 1.5° or less. The wedge angle may be greater than or equal to 0.6 and less than or equal to 1.4°. The wedge angle may be greater than or equal to 0.6 and less than or equal to 1.3°.

The first connection surface 24 is a portion at which a corner formed by the side surface 2a and the outer peripheral surface 2d is chamfered. The first connection surface 24 is an inclined surface that connects the side surface 2a to the first curved surface 21. The first connection surface 24 extends in the entire circumferential direction of the main body portion 2 together with the first curved surface 21. The first connection surface 24 is inclined so as to protrude in the radial direction of the main body portion 2 from the side surface 2a toward the side surface 2b. In the first connection surface 24, the side surface 2a and the first curved surface 21 may be smoothly connected to each other via a curved surface having a circular arc shaped cross section formed by R processing or the like. The first connection surface 24 may have no curved surface. The first connection surface 24 may be omitted. The side surface 2a and the first curved surface 21 may be directly connected to each other.

The second connection surface 25 is a portion at which a corner formed by the side surface 2b and the outer peripheral surface 2d is chamfered. The second connection surface 25 is an inclined surface that connects the side surface 2b to the second curved surface 22. The second connection surface 25 extends in the entire circumferential direction of the main body portion 2 together with the second curved surface 22. The second connection surface 25 is inclined so as to protrude in the radial direction of the main body portion 2 from the side surface 2b toward the side surface 2a. In the second connection surface 25, the side surface 2b and the second curved surface 22 may be smoothly connected to each other via a curved surface having a circular arc shaped cross section formed by R processing or the like. The second connection surface 25 may have no curved surface. The second connection surface 25 may be omitted. The side surface 2b and the second curved surface 22 may be directly connected to each other.

In the piston ring described above, the intermediate surface 23 having the flat portion 23a is at least partially formed so as to connect the first curved surface 21 to the second curved surface 22. The intermediate surface width MW in the width direction A connecting the side surface 2a to the side surface 2b is 0.05 mm or more and 0.30 mm or less. In such a configuration, minute wedge-shaped spaces are respectively formed at a portion between the first curved surface 21 near the intermediate surface 23 of the piston ring 1 and the cylinder inner wall and at a portion between the second curved surface 22 near the intermediate surface 23 of the piston ring 1 and the cylinder inner wall. By providing the intermediate surface 23 having a length of 0.05 mm or more and 0.30 mm or less, a reduction in friction loss due to conformable sliding at the initial stage of starting use of the piston ring 1 is promoted. Therefore, the minute wedge-shaped space is easily formed. As a result, it is possible to further reduce friction at the initial stage of starting use of the piston ring 1.

[Modification of Piston Ring]

Although the embodiments of the present disclosure have been described above, the present disclosure is not limited to the above-described embodiments. The present disclosure can be implemented in various forms with various modifications and improvements based on knowledge of those skilled in the art, including the above-described embodiments.

In the above embodiment, the common virtual circle that defines the circular arc shapes of the first curved surface 21 and the second curved surface 22 is a part of the symmetrical barrel shape, but the present invention is not limited to this example. For example, the shapes of the first curved surface 21 and the second curved surface 22 may be a part of a common virtual eccentric barrel shape. The shapes of the first curved surface 21 and the second curved surface 22 may not be a part of the barrel shape. The shapes of the first curved surface 21 and the second curved surface 22 may be a part of a virtual ellipse. In short, the shapes of the first curved surface 21 and the second curved surface 22 may be convexly curved outwards in the radial direction of the main body portion 2.

The intermediate surface 23 is configured as the flat portion 23a extending linearly parallel to the width direction A in the entire intermediate surface width MW, but the present invention is not limited thereto. The flat portion 23a may have a flat portion width dimension of less than 50% of the intermediate surface width MW in the width direction A. The intermediate surface 23 may have a linear shape (tapered shape) inclined in the width direction A. Although in the embodiment described above, the wedge angle is calculated as an angle substantially formed by the width direction A in which the intermediate surface 23 extends and the tangent to the outer peripheral surface 2d. In this case, however, the wedge angle may be calculated as an angle formed by the inclination direction of the intermediate surface 23 and the tangent to the outer peripheral surface 2d.

A portion of the intermediate surface 23 other than the flat portion 23a may be a convex portion protruding outwards in the radial direction. The portion of the intermediate surface 23 other than the flat portion 23a may be a groove or a concave portion recessed inwards in the radial direction. In this case, the convex portion, the groove, or the concave portion may have a curved shape in a cross-sectional view. The convex portion, the groove, or the concave portion may be formed by a plurality of straight lines in a cross-sectional view.

Although both the first wedge angle φ1 and the second wedge angle φ2 are 1.5° or less, the present invention is not limited to this example. For example, the first wedge angle φ1 and the second wedge angle φ2 may be different from each other. Any one of the first wedge angle φ1 and the second wedge angle φ2 may be 1.5° or less.

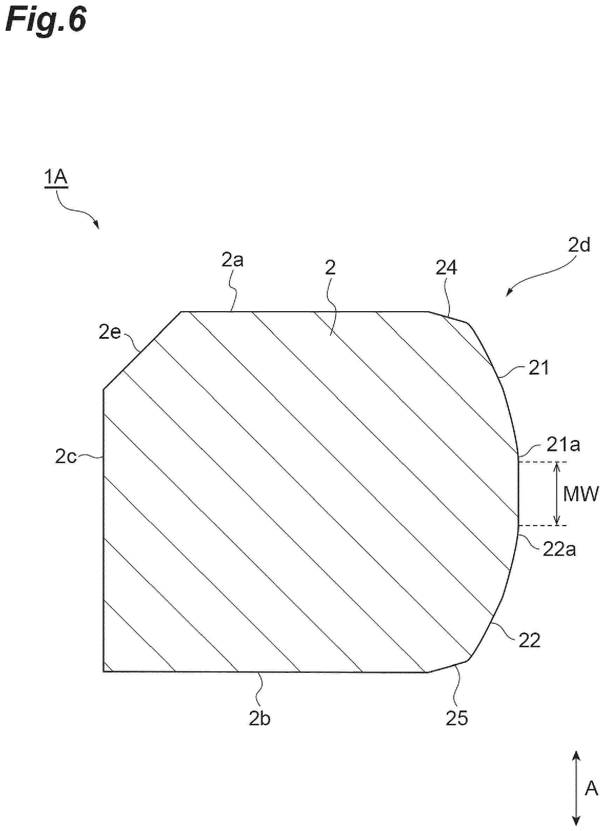

In the above embodiment, the side surfaces 2a and 2b are substantially orthogonal to the inner peripheral surface 3c. However, for example, as in a piston ring 1A illustrated in FIG. 6, an aspect (so-called inner bevel shape) including an inner cut surface 2e extending obliquely in the width direction A so as to connect the side surface 2a to the inner peripheral surface 3c may be adopted. The inner cut surface 2e is a portion at which a corner formed by the side surface 2a and the inner peripheral surface 3c is cut out in the piston ring 1. The inner cut surface 2e extends over the entire main body portion 2 in the circumferential direction. The notch portion may have an inner step shape. The torsion angle of the piston ring in a predetermined cylinder mounting state may be 5 to 90 arcminute. The predetermined cylinder mounting state corresponds to a case in which the piston is installed in the cylinder in a state in which the piston ring 1A is provided in the ring groove of the piston outer peripheral surface. With such an inner cut surface 2e, since the second boundary 22a comes into strong contact with the cylinder inner wall, an effect of reducing an oil consumption amount due to conformable sliding at the initial stage is easily increased.

In addition to the second ring, the piston ring according to the embodiment and the modification can be used as, for example, a top ring or a third ring in a diesel engine.

In the above-described embodiment and the above-described modification, the end surface 4a of the abutment end portion 4 and the end surface 5a of the abutment end portion 5 are right-angle abutments formed at a right angle with respect to the circumferential direction of the main body portion 2, but the shape of the abutment end portion is not limited thereto. For example, the end surfaces 4a and 5a may be inclined abutments formed to be inclined with respect to the circumferential direction. The end surfaces 4a and 5a may be stepped abutments formed such that the side surface 2a side of the end surface 4a and the side surface 2b side of the end surface 5a protrude toward the opposite sides.

**Examples**

The present disclosure will be described in more detail by the following examples, but the present disclosure is not limited to these examples.

(First Example)

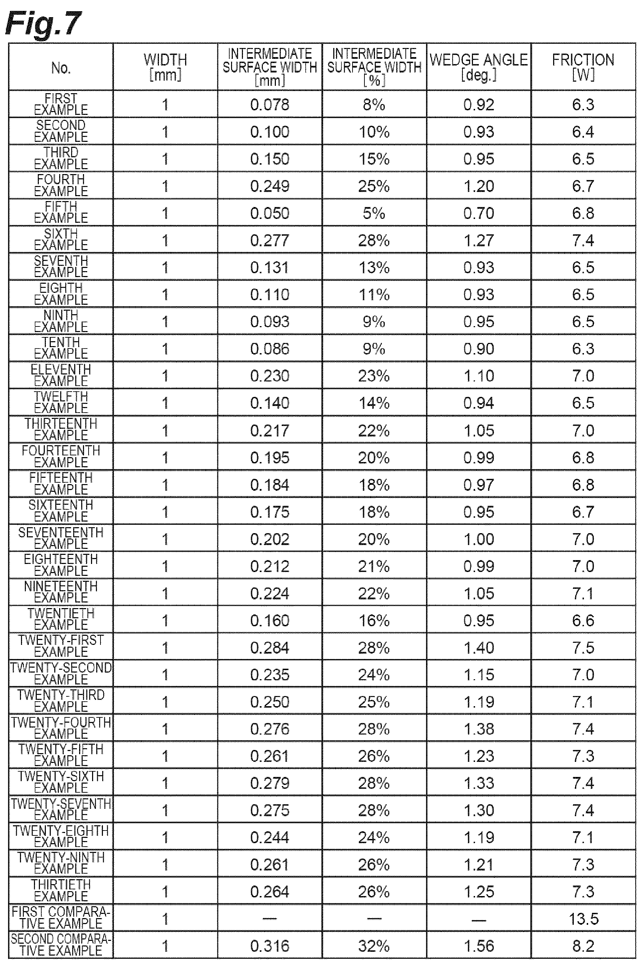

A second ring of a first example was produced by the following procedure. First, a second ring having a main body portion provided with a first curved surface, a second curved surface, and an intermediate surface on an outer peripheral surface thereof was manufactured. As the main body portion, a SWOSC-V material was used as a wire material, and the wire material was subjected to rolling roll formation and drawing formation. The nominal diameter of the main body portion was set to 73 mm. The width of the main body portion was set to 1.0 mm, and the thickness of the main body portion was set to 2.1 mm. The radius of curvature of a virtual circle corresponding to a symmetrical barrel shape defining a circular arc of the first curved surface and a circular arc of the second curved surface was set to R30. The virtual droop amount of the virtual circle was 0.002 mm or more and 0.006 mm or less. The second ring had an inner bevel shape, and the torsion angle of the second ring was set to 5 to 90 arcminute. A CrN ion plating film was applied to the surface. The measurement of the intermediate surface width MW and the calculation of the wedge angle were performed using SURFCOM 1900DX3 manufactured by ACCRETECH (TOKYO SEIMITSU CO., LTD.) as a contour shape measuring machine. The wedge angle was calculated using operation software such as dimensions on the contour image provided in the contour shape measuring machine. Friction was measured using the second ring manufactured as described above. In the measurement of friction, a piston incorporating a piston ring set including the second ring was installed in a cylinder, motoring operation was performed at an engine rotation speed of 2000rpm, and friction was measured. The second rings of second to thirtieth examples were prepared as illustrated in FIG. 7 by changing conditions of the outer peripheral shapes of the plurality of second rings manufactured in the same manner, and the measurement of the intermediate surface width MW, the calculation of the wedge angle, and the measurement of friction were performed.

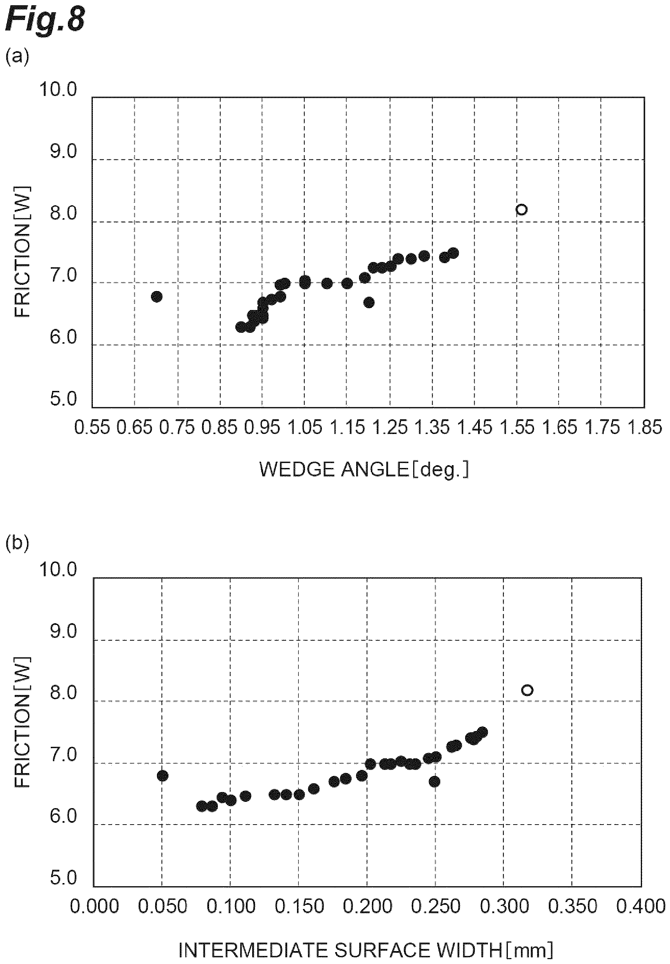

FIG. 7 is a table illustrating friction measurement results of piston rings according to examples and comparative examples. FIG. 8(a) is a graph illustrating the friction measurement results of FIG. 7, in which a horizontal axis of the graph represents a wedge angle. FIG. 8(b) is a graph illustrating the friction measurement results of FIG. 7, in which a horizontal axis of the graph represents an intermediate surface width.

In FIG. 8, a first comparative example is a piston ring having a tapered outer peripheral surface, and a white circle plot located on the rightmost side shows a second comparative example. A black circle plot group arranged on the left side of the white circle plot shows first to thirtieth examples. As illustrated in FIG. 8, the friction of the first comparative example is as large as 13.5, which is outside the scale of the vertical axis. The friction of the second comparative example is 8.2, which is smaller than the friction of the first comparative example, but the friction is larger than that of the black circle plot group.

In the black circle plot group, it can be seen that, for example, a plot in which the intermediate surface width MW is 0.078 mm (first example), a plot in which the intermediate surface width MW is 0.100 mm (second example), and a plot in which the intermediate surface width MW is 0.150 mm (third example) have smaller friction than friction of a plot in which the intermediate surface width MW is 0.050 mm (fifth example). Such a tendency that the friction is smaller than that of the plot in which the intermediate surface width MW is 0.050 mm (fifth example) is seen in a range in which the intermediate surface width MW is 0.050 mm or more and 0.200 mm or less.

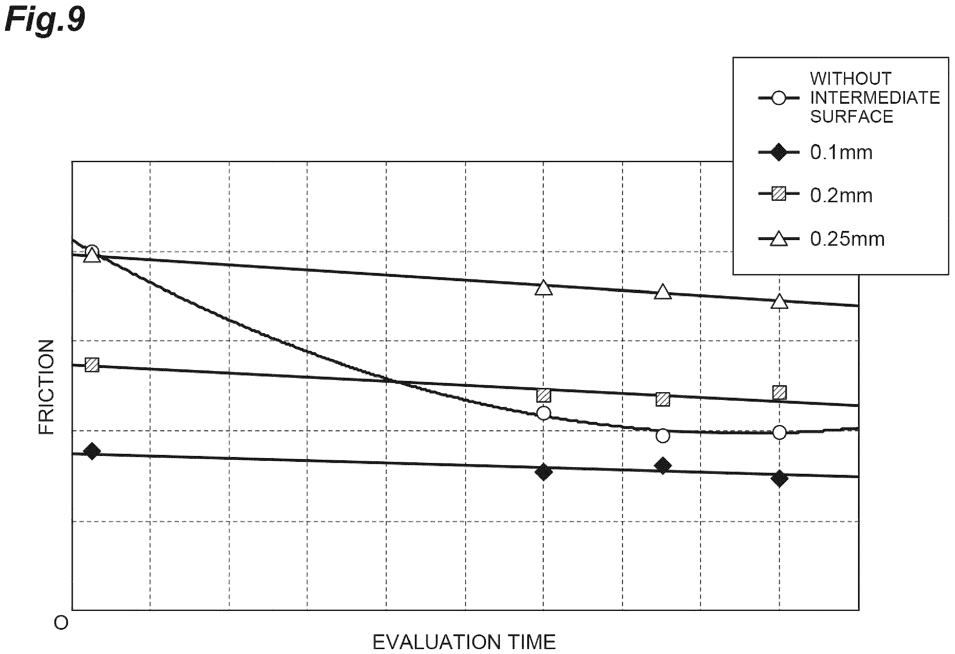

FIG. 9 is a graph illustrating time-series changes in friction of piston rings according to the example and the comparative example. In FIG. 9, a temporal change of the magnitude of friction with respect to an evaluation time of measurement of friction in the case of using piston rings respectively having intermediate surface widths MW of "none", 0.1 mm, 0.2 mm, and 0.25 mm is shown. The "none" of the intermediate surface width MW corresponds to a normal barrel shape in which the intermediate surface is not provided on the outer peripheral surface 2d. It is noted that an origin O in FIG. 9 has an evaluation time of 0 (evaluation start time point).

As illustrated in FIG. 9, a white circle plot without the intermediate surface width MW has, as an initial value, the magnitude of friction larger than those of plots respectively having the intermediate surface widths MW of 0.1 mm, 0.2 mm, and 0.25 mm, and indicates that the friction gradually decreases as the evaluation time elapses. This temporal change in friction is considered to correspond to a reduction in friction loss due to conformable sliding at the initial stage of starting use of the piston ring. On the other hand, in the plots respectively having the intermediate surface widths MW of 0.1 mm, 0.2 mm, and 0.25 mm, each of the plots has, as an initial value, the magnitude of friction smaller than that of the white circle plot without the intermediate surface width MW, and has friction gradually decreasing as the evaluation time elapses. However, a change rate of the decrease in friction is smaller than that of the white circle plot without the intermediate surface width MW. From such a manner of transition of the temporal change in friction, it is considered that an effect of reducing the friction loss due to initial conformable sliding has already been obtained at a stage in which the friction is the initial value (at the time of starting use of the new piston ring). It is considered that, by providing the intermediate surface on the outer peripheral surface, a reduction in friction loss is promoted as compared with a case in which the intermediate surface is not provided on the outer peripheral surface.

Referring back to FIG. 8, in a range in which the intermediate surface width MW is 0.050 mm or more and 0.200 mm or less in FIG. 8, it can be said that the effect of reducing the friction loss due to initial conformable sliding as shown in FIG. 9 is particularly remarkably obtained. By performing back calculation from the fact that there is a reduction in friction loss due to initial conformable sliding as shown in FIG. 9, it is possible to estimate the position of the plot in which the intermediate surface width MW is less than 0.050 mm in FIG. 8. For example, a plot in which the intermediate surface width MW is less than 0.050 mm is estimated to have a larger value of friction than that of a plot in which the intermediate surface width MW is 0.050 mm, and is estimated to approach a value of friction of the second comparative example. Based on this estimation, it can be considered that, by providing the intermediate surface on the outer peripheral surface, the intermediate surface width MW is in the range of 0.050 mm or more and 0.300 mm or less, that is, the black circle plot group in FIG. 8 can obtain the effect of achieving a reduction in friction loss due to initial conformable sliding.

[3-Piece Oil Control Ring]

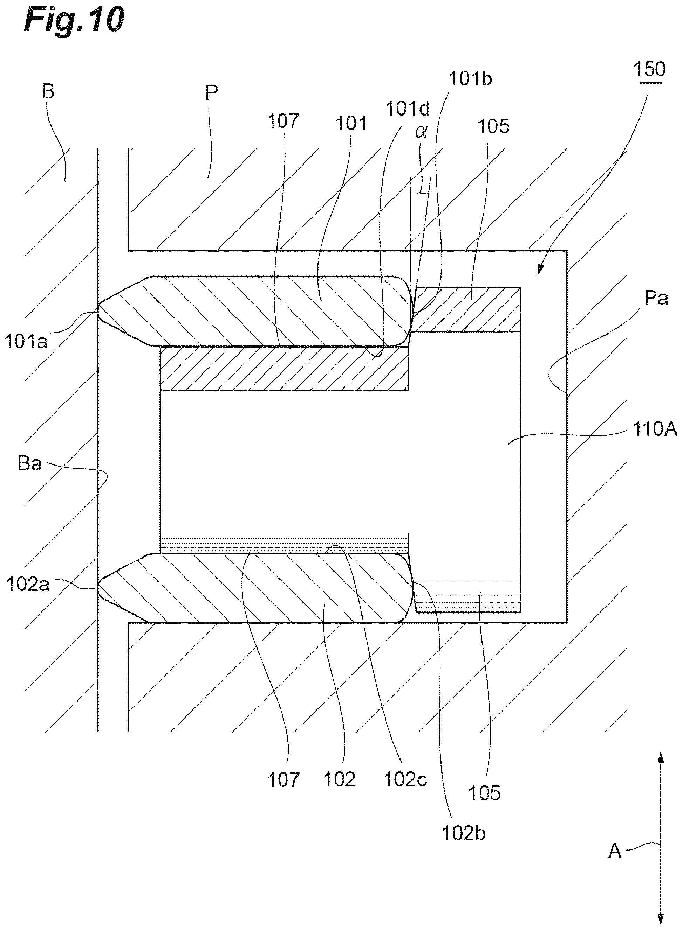

FIG. 10 is a cross-sectional view schematically illustrating a state in which an example of a 3-piece oil control ring is installed in a groove Pa of the piston P. This cross-sectional view illustrates a cross section of the oil control ring in the axial direction (a reciprocating direction A of the piston P). The reciprocating direction A may be the same direction as the width direction A.

As illustrated in FIG. 10, an oil control ring 150 includes a pair of side rails 101 and 102 and a spacer expander 110A disposed between the pair of side rails 101 and 102. Outer peripheral surfaces 101a and 102a of the side rails 101 and 102 are in contact with an inner surface Ba of a cylinder bore B. Inner peripheral surfaces 101b and 102b of the side rails 101 and 102 are respectively in contact with ear portions 105 of the spacer expander 110A.

[Side Rail]

The material of each of the side rails 101 and 102 is, for example, stainless steel or carbon steel. The side rails 101 and 102 may include a hard coating (not illustrated) provided so as to respectively cover at least the outer peripheral surfaces 101a and 102a. Examples of the material of the hard coating include amorphous carbon, chromium nitride (CrN), titanium nitride (TiN), titanium carbide (TiC), aluminum titanium nitride (TiAlN), chromium nitride (CrN), TiCN, AlCrN, TiC, and nickel alloys such as nickel (Ni) and nickel phosphorus (NiP). As illustrated in FIG. 10, in the present embodiment, the side rails 101 and 102 have the same shape. Hereinafter, the shape of the side rail 101 will be described, and the description of the shape of the side rail 102 will be omitted.

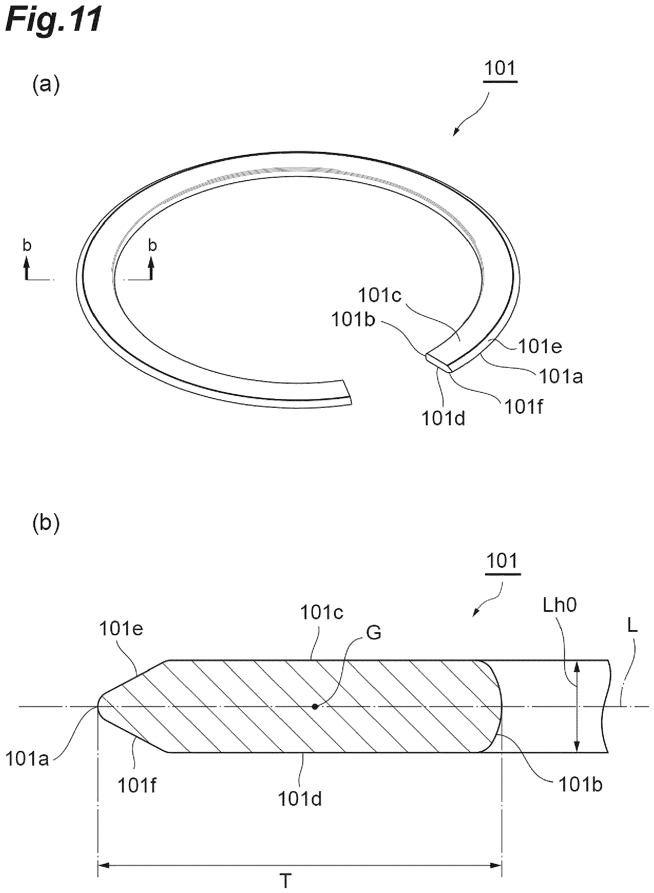

FIG. 11(a) is a perspective view of the side rail 101, and FIG. 11(b) is a cross-sectional view taken along line b-b illustrated in FIG. 11(a). The side rail 101 has a vertically symmetrical shape relative to a center line L indicated by an alternate long and short dash line in FIG. 11(b) in a cross section in the axial direction. The side rail 101 has an outer peripheral surface 101a, an inner peripheral surface 101b, first and second side surfaces 101c and 101d, a first inclined surface 101e between the outer peripheral surface 101a and the first side surface 101c, and a second inclined surface 101f between the outer peripheral surface 101a and the second side surface 101d. In the cross section illustrated in FIG. 11(b), a center of gravity G of the side rail 101 is on the center line L and is located closer to the inner peripheral surface 101b than to the center position of the side rail 101 in the thickness direction. The inner peripheral surface 101b has a vertically symmetrical shape in a cross section in the axial direction. As an example, the outer peripheral surface 101a, the first inclined surface 101e, and the second inclined surface 101f (the surface on the outer peripheral side of the side rail 101) have a vertically symmetrical shape in the axial cross section. The cross-sectional shape of the outer peripheral side of the side rail 101 is not limited to this example, and may have a vertically asymmetric shape in the cross section in the axial direction. For example, the outer peripheral surface 101a may have a cross-sectional shape biased to one of the first and second side surfaces 101c and 101d relative to the center line L.

As illustrated in FIG. 11(a), the side rail 101 has an annular shape, and has, for example, an outer diameter of 60 to 120 mm and an inner diameter of 56 to 114 mm. A thickness T (= (outer diameter - inner diameter)/2) of the side rail 101 is, for example, 1.0 to 3.0 mm, and may be 1.2 to 2.7 mm or 1.4 to 2.5 mm. A height Lh0 of the side rail 101 is, for example, 0.2 to 0.7 mm, and may be 0.25 to 0.55 mm or 0.30 to 0.45 mm. The term "annular" as used herein does not necessarily mean a closed circle, and the side rail 101 may have an abutment portion. The side rail 101 may have a perfect circular shape or an elliptical shape in plan view. It is noted that the contour shape of the side rail (the shape of the inner peripheral surface, the outer peripheral surface, and the like) can be measured using a contour shape measuring machine (for example, manufactured by ACCRETECH (TOKYO SEIMITSU CO., LTD.)).

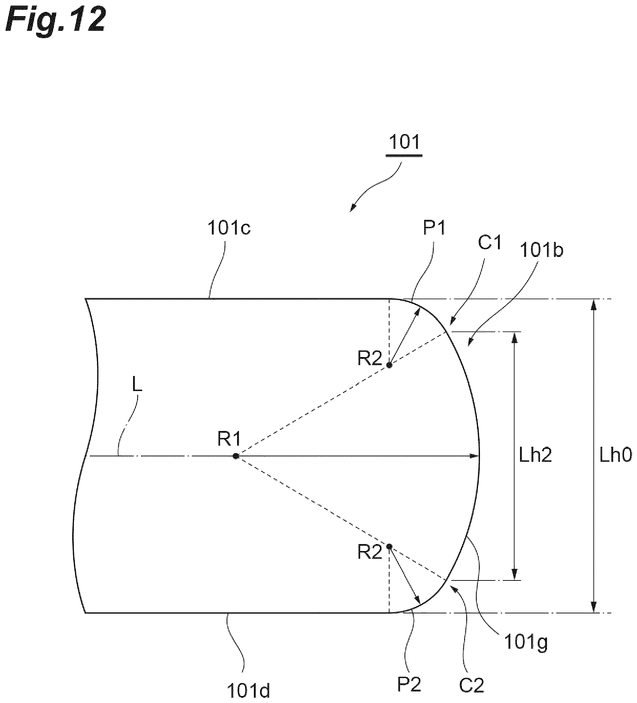

FIG. 12 is an enlarged cross-sectional view illustrating the inner peripheral side of the side rail 101. As illustrated in FIG. 12, the inner peripheral surface 101b of the side rail 101 includes an inner tip portion 101g located at the center portion in the height direction of the side rail 101 in the cross section in the axial direction. The inner tip portion 101g satisfies a following condition A1.

$$\text{Condition A1: } 0.7 \leq \text{R1/Lh0} \leq 1.1$$

In the formula, R1 represents the radius of curvature (unit: mm) of a curve forming the inner tip portion 101g, and Lh0 represents the height (unit: mm) of the side rail. When the value of R1/Lh0 is in the range of 0.7 to 1.1, an increase in an oil consumption amount can be sufficiently suppressed even when the average speed of reciprocation of the piston exceeds 20 m per second.

A ratio Lh2/Lh0 of a height Lh2 (height Lh2 in FIG. 12) of the inner tip portion 101g to a height Lh0 of the side rail 101 may be 1 or less. The ratio Lh2/Lh0 may be 0.5 to 0.75. The ratio Lh2/Lh0 may be 0.5 to 0.7. The ratio Lh2/Lh0 may be 0.5 to 0.65. The height Lh2 means a distance from one inflection point (a vertex of a convex curved portion C1) to the other inflection point (a vertex of a convex curved portion C2) in the cross section in the axial direction (refer to FIG. 12). When the value of Lh2/Lh0 is within the above range, an increase in an oil consumption amount can be more reliably suppressed even when the average speed of reciprocation of the piston exceeds 20 m per second.

As illustrated in FIG. 12, the inner peripheral surface 101b may further include peripheral edge portions P1 and P2 positioned so as to sandwich the inner tip portion 101g. The inner tip portion 101g and the peripheral edge portion P1 may constitute the convex curved portion C1, and the inner tip portion 101g and the peripheral edge portion P2 may constitute the convex curved portion C2. The peripheral edge portions P1 and P2 may satisfy a following condition A2.

$$\text{Condition A2: } 0.2 \leq \text{R2/Lh0} \leq 0.5$$

In the formula, R2 represents the radius of curvature (unit: mm) of the curve constituting the peripheral edge portions P1 and P2, and Lh0 represents the height (unit: mm) of the side rail. When the value of R2/Lh0 is in the range of 0.2 to 0.5, an increase in an oil consumption amount can be sufficiently suppressed even when the average speed of reciprocation of the piston exceeds 20 m per second.

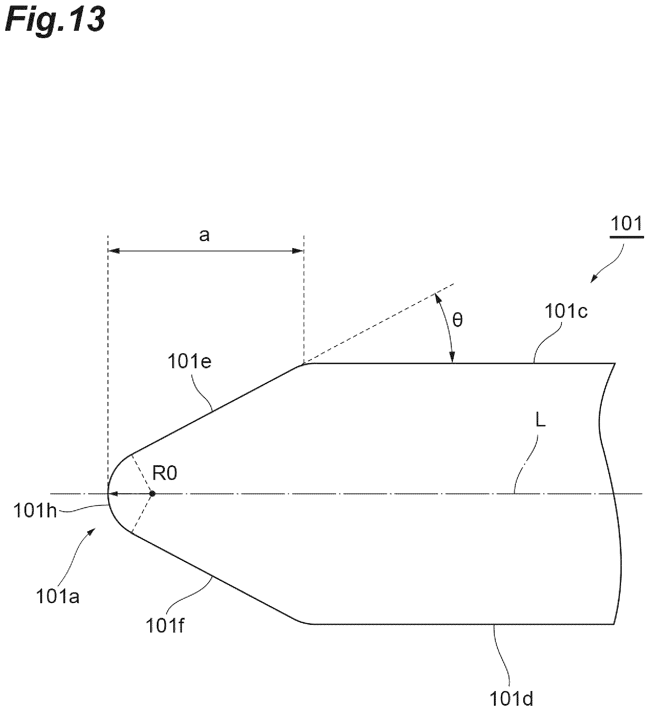

FIG. 13 is an enlarged cross-sectional view illustrating the outer peripheral side of the side rail 101. As illustrated in FIG. 13, the outer peripheral surface 101a of the side rail 101 may have an outer tip portion 101h that satisfies a following condition A3 in the cross section in the axial direction.

$$\text{Condition A3: } 0.1 \leq \text{R0/Lh0} \leq 0.23$$

In the formula, R0 represents the radius of curvature (unit: mm) of a curve forming the outer tip portion 101h, and Lh0 represents the height (unit: mm) of the side rail 101.

An angle $\theta$ formed between the first and second inclined surfaces 101e and 101f may be 30 to 50°. The angle $\theta$ means an angle formed between a plane orthogonal to the axial direction and the inclined surfaces 101e and 101f. In the cross section in the axial direction, a distance a (unit: mm) in the radial direction from the tip portion of the outer peripheral surface 101a to a boundary between the side surface 101c and the inclined surface 101e may satisfy a following condition A4.

$$\text{Condition A4: } 0.1 \leq \text{a/T} \leq 0.2$$

In the formula, T represents the thickness (unit: mm) of the side rail 101 in the cross section in the axial direction (refer to FIG. 11(b)).

In recent years, an internal combustion engine typified by an automobile engine has been intended to achieve higher output, higher fuel efficiency, and lower emission from the viewpoint of environmental protection. For example, from the viewpoint of higher output, the internal combustion engine tends to operate at a higher rotation speed than before. When the average speed of the reciprocation exceeds 20 m per second, a phenomenon in which the oil consumption amount increases is observed. The inner peripheral surface of the side rail 101 according to the present disclosure is not rounded as compared with a conventional side rail having a semicircular rounded inner peripheral surface. That is, the inner tip portion of the inner peripheral surface satisfies the condition A1. When the inner peripheral surface has a semicircular shape, the value of R1/Lh0 is 0.5. Since the inner tip portion of the inner peripheral surface satisfies the condition A1, the oil consumption amount can be sufficiently suppressed even when the internal combustion engine is operating at a high rotation speed. This is presumed to be because the behavior of the side rail during high-speed operation is stabilized, the side surface of the side rail easily abuts on the inner surface of the piston groove and, as such, sealing performance is improved. The behavior of the side rail is affected by frictional force with a cylinder and inertial force accompanying reciprocation. It is presumed that the influence of inertial force is dominant over the influence of frictional force because an increase in the speed of reciprocation increases inertial force applied to an oil control ring. When the inner tip portion satisfies the condition A1, the center of gravity is shifted to the inner peripheral surface side as compared with a conventional side rail, and a position in contact with an ear portion of a spacer expander is shifted. It is presumed that these matters contribute to stabilization of the behavior of the side rail. That is, with the side rail 101 and the oil control ring to which the side rail 101 is applied, it is possible to sufficiently suppress an increase in an oil consumption amount even when an internal combustion engine is operating at a high rotation speed.

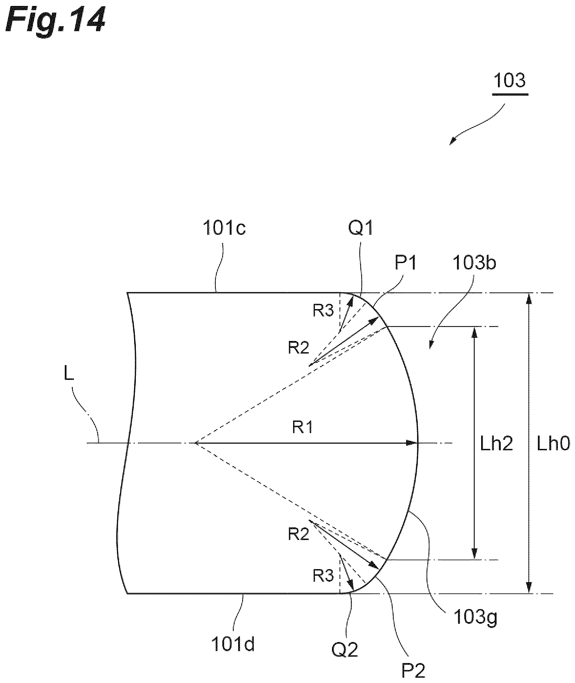

The side rail of the present disclosure is not limited to the side rail 101. For example, in the side rail 101, a case in which the inner peripheral surface of the side rail 101 is formed with two circular arcs having different radii of curvature in the cross section in the axial direction has been described, but the inner peripheral surface of the side rail may be formed with three or more circular arcs having different radii of curvature in the cross section in the axial direction. For example, a side rail 103 illustrated in FIG. 14 includes three circular arcs having different radii of curvature. That is, an inner peripheral surface 103b of the side rail 103 is formed with an inner tip portion 103g having a radius of curvature R1, first peripheral edge portions P1 and P2 each having a radius of curvature R2 formed so as to sandwich the inner tip portion, and second peripheral edge portions Q1 and Q2 each having a radius of curvature R3, in which the second peripheral edge portions Q1 and Q2 are respectively formed outside the first peripheral edge portions P1 and P2. The inner peripheral surface 103b may satisfy a following conditions A1a to A3a. It is noted that, in the formula, Lh0 represents the height of the side rail 103, and Lh2 represents the height (height Lh2 in FIG. 14) of the inner tip portion (portion having the radius of curvature R1).

$$\text{Condition A1a: } 0.7 \leq R1/Lh0 \leq 1.1$$

$$\text{Condition A2a: } 0.2 \leq R2/Lh0 \leq 0.5$$

$$\text{Condition A3a: } Lh2/Lh0 \leq 1.0$$

A value of the ratio Lh2/Lh0 according to the condition A3a may be 0.5 to 0.75. The value of the ratio Lh2/Lh0 may be 0.5 to 0.7. The value of the ratio Lh2/Lh0 may be 0.5 to 0.65. As illustrated in FIG. 14, Lh2 means the height of the inner tip portion 103g (distance from one inflection point to the other inflection point) in the cross section in the axial direction. When the value of Lh2/Lh0 is within the above range, an increase in an oil consumption amount can be more reliably suppressed even when the average speed of reciprocation of the piston exceeds 20 m per second.

Furthermore, when the side rail 101 is used in combination with the above-described piston ring 1, the piston ring set can be configured as a piston ring set including the piston ring 1, the side rail 101, and an oil control ring formed with a spacer expander disposed between the pair of side rails. With such a piston ring set, the piston ring 1 promotes a reduction in friction loss due to conformable sliding at the initial stage of starting use of the piston ring 1. Therefore, the minute wedge-shaped space is easily formed. As a result, it is possible to further reduce friction at the initial stage of starting use of the piston ring 1. In addition to this operation effect, the side rail 101 can sufficiently suppress an increase in an oil consumption amount even when the internal combustion engine is operating at a high rotation speed. Therefore, for example, it is possible to suppress a degree of causing the piston ring 1 to share the function of the oil consumption amount generated when the internal combustion engine operates at a high rotation speed after the initial stage of starting use of the piston ring 1 elapses, and the piston ring 1 can be configured to further reduce the friction at the initial stage of starting use of the piston ring 1.

[Spacer Expander]

<First Example>

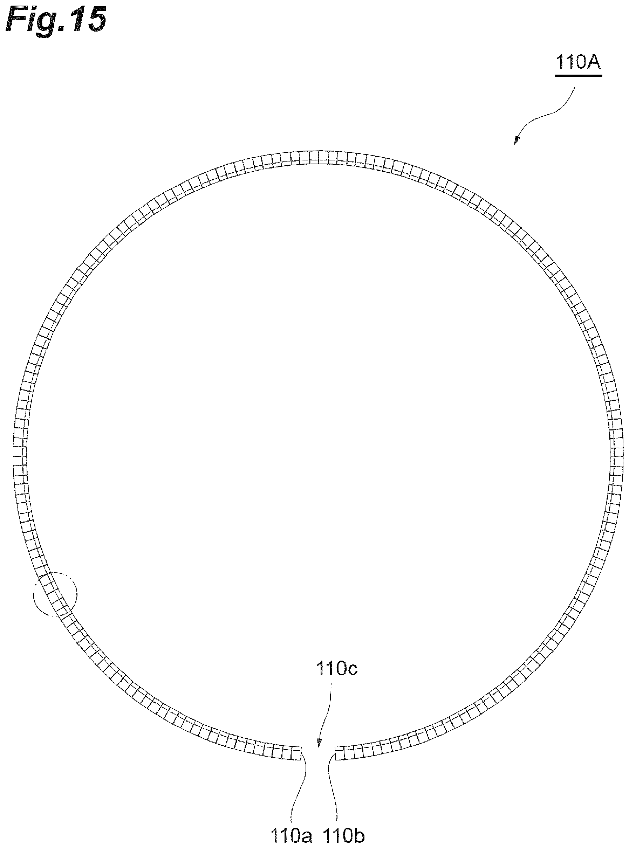

FIG. 15 is a plan view of a first example of the spacer expander. As illustrated in the drawing, a spacer expander 110A has an annular shape and has an abutment portion 110c formed by two end surfaces 110a and 110b. The spacer expander 110A is manufactured, for example, by pressing (cutting process and punching process) a steel plate or by plastically deforming a wire rod made of spring steel while engaging the wire material with a plurality of gears.

The spacer expander 110A may be surface-treated from the viewpoint of improving abrasion resistance, adhesion resistance, and the like. For example, a film may be formed on the surface of the spacer expander 110A by electroless plating and electrolytic plating, hard paint coating, physical vapor deposition (PVD), chemical vapor deposition (CVD), or a sputtering method. Examples of the material of the film include an amorphous carbon film, a chromium nitride film (CrN), a titanium nitride film (TiN), titanium carbide (TiC), aluminum titanium nitride (TiAlN), chromium nitride (CrN), TiCN, AlCrN, TiC, or plating made of nickel alloy such as nickel (Ni) or nickel phosphorus (NiP). A polymer coating such as polyimide may be formed other than the coating made of an inorganic material. It is noted that the polymer film may be mixed with a filler such as carbon fiber or glass fiber.

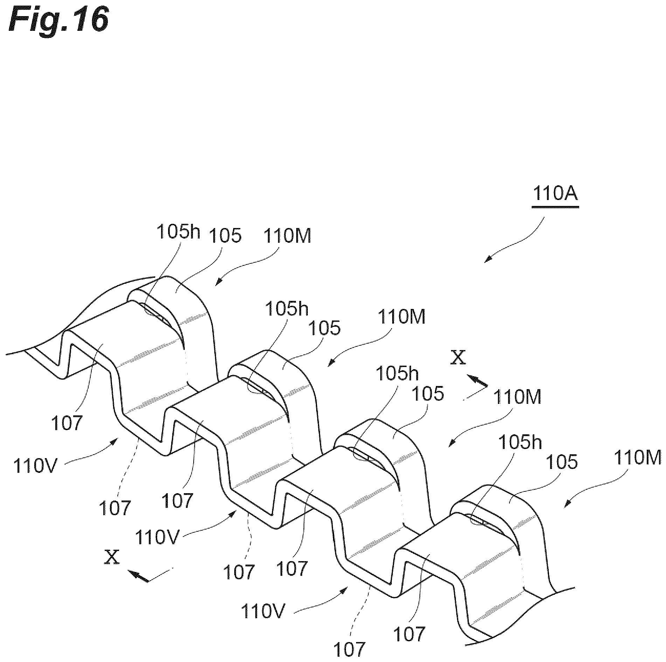

FIG. 16 is an enlarged perspective view illustrating a region surrounded by an alternate long and short dash line in FIG. 15. As illustrated in FIG. 10, the oil control ring 150 includes the pair of side rails 101 and 102 and the spacer expander 110A disposed between the pair of side rails 101 and 102. The outer peripheral portions of the side rails 101 and 102 are in contact with the inner surface Ba of the cylinder bore B. The thickness of the hatched portion in FIG. 10 (thickness of the spacer expander) is, for example, 0.1 mm to 0.7 mm. By making this portion as thick as possible, a higher tension can be obtained and a contact area with the side rails 101 and 102 can be secured, so that a more excellent wear reduction effect can be obtained. The rigidity of each part, which will be described later, of the spacer expander 110A can also be enhanced. As the side rails 101 and 102, a conventionally known side rail can be used. The outer peripheral surface shape and the inner peripheral surface shape of the side rail may be different from those of the side rails 101 and 102, and for example, may not necessarily have a symmetrical cross-sectional shape.

The spacer expander 110A includes a plurality of ear portions 105 respectively abutting on the inner peripheral surfaces 101b and 102b of the side rails 101 and 102, and a plurality of rail facing portions 107 facing side surfaces 101d and 102c of the side rails 101 and 102, respectively. Each of the rail facing portions 107 is formed on the outer peripheral side of the ear portion 105 and is disposed at a position adjacent to the ear portion 105. In a state in which the side rails 101 and 102 are combined with the spacer expander 110A, the inner peripheral surfaces 101b and 102b of the side rails 101 and 102 respectively abut on the ear portions 105, and the rail facing portions 107 and the side surfaces 101d and 102c of the side rails 101 and 102 face each other, so that each of the ear portions 105 is formed higher than a corresponding one of the rail facing portions 107. The spacer expander 110A has an opening 105h formed by each of the ear portions 105 and each of the rail facing portions 107.

A surface of each of the ear portions 105 on which each of the side rails 101 and 102 abuts is inclined in the axial direction. An inclination angle α illustrated in FIG. 10 may be 5 to 30°. The inclination angle α may be 10 to 25°.

The spacer expander 110A has, for example, a shape in which a crest portion 110M and a valley portion 110V are alternately connected when placed on a workbench. The ear portion 105 located at the crest portion 110M (upper side in FIG. 16) of the spacer expander 110A and the ear portion 105 located at the valley portion 110V (lower side in FIG. 16) have substantially the same shape. The rail facing portion 107 located at the crest portion 110M (upper side in FIG. 16) of the spacer expander 110A and the rail facing portion 107 located at the valley portion 110V (lower side in FIG. 16) also have substantially the same shape. Therefore, when the spacer expander 110A placed on the workbench is turned upside down, the crest portion 110M illustrated in FIG. 16 becomes the valley portion 110V, and the valley portion 110V becomes the crest portion 110M.

Hereinafter, the ear portion 105 and the rail facing portion 107 located at the crest portion 110M of the spacer expander 110A will be described, and the description of the ear portion 105 and the rail facing portion 107 located at the valley portion 110V will be omitted. It is noted that the description regarding a height such as "the highest position" in the ear portion 105 and the rail facing portion 107 described below is intended for the ear portion 105 and the rail facing portion 107 of the crest portion 110M located on the upper side in a state in which the spacer expander 110A is placed on a workbench. In this state, strictly speaking, the ear portion 105 and the rail facing portion 107 of the valley portion 110V located on the lower side should be referred to as, for example, the "lowest position" at the ear portion 105 and the rail facing portion 107. However, as described above, if the spacer expander 110A is simply turned upside down, the valley portion 110V becomes the crest portion 110M. Therefore, the expression such as the "highest position" in the present disclosure is also applied to the ear portion 105 and the rail facing portion 107 of the valley portion 110V.

The ear portion 105 is a portion on which the inner peripheral surface 101b of the side rail 101 abuts. The shape of the ear portion 105 may satisfy a condition B1 represented by inequality (1). The shape of the ear portion 105 may satisfy a condition B2 represented by inequality (2).

$$\text{Condition B1: } W/H \geq 1.5 \ldots \ (1)$$

$$\text{Condition B2: } W/H \geq 1.7 \ldots \ (2)$$

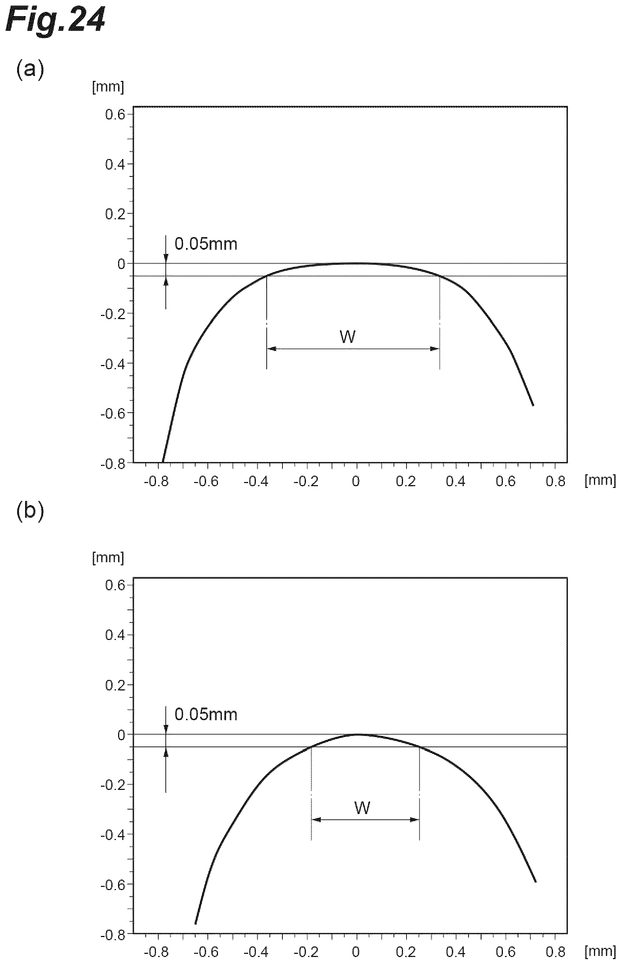

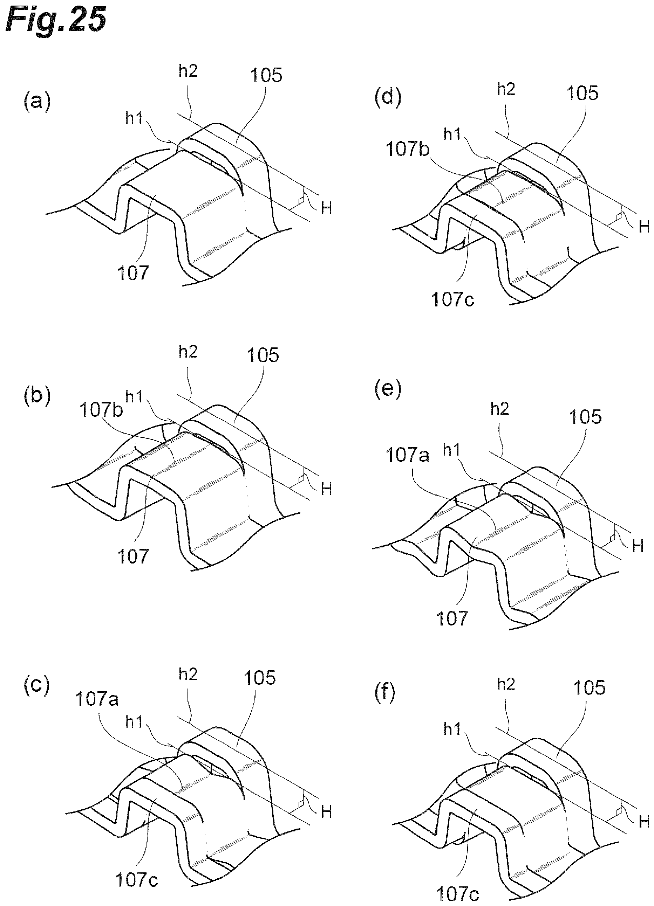

W represents the width (unit: mm) of the ear portion 105 at a position moved by 0.05 mm from the highest position of the ear portion 105 in the direction of the rail facing portion 107 (thickness direction of the spacer expander 110A) (refer to FIG. 24(a)), and H represents a height difference (unit: mm) between the highest position of a region adjacent to the ear portion and the highest position of the ear portion in the rail facing portion 107 (refer to FIG. 25(a)). In specifying the position of the width W, the reason why the position is set to a position moved by 0.05 mm in the direction of the rail facing portion 107 (downwards in the graph of FIG. 24(a)) from the highest position of the ear portion 105 is that it is presumed that frequency at which the side rails 101 and 102 respectively abut on the positions of the ear portions 105 is high at the initial stage of using the oil control ring 150.

The ear portion 105 in which the value of W/H is 1.5 or more can suppress a wear amount due to contact with the side rail 101 as compared with an ear portion in which the value of W/H is less than 1.5. An upper limit value of the value of W/H is, for example, 5.0 from the viewpoint of tension generated from the spacer expander 110A. The top portion of the ear portion 105 may have a flat portion. Alternatively, the top portion of the ear portion 105 may not have a flat portion. That is, the shape of the side surface of the ear portion 105 may be formed of a continuous curved surface, in other words, the side surface shape of the ear portion 105 may be a shape in which curved surfaces having different curvatures are continuous. By adopting such a configuration, the spacer expander can be easily manufactured, and a shape in which stress concentration is less likely to occur during plastic deformation can be formed. Therefore, it is possible to reduce occurrence of breakage and the like.

When the width W of the ear portion 105 is, for example, 0.7 to 1.8 mm, the height H of the ear portion 105 may be 0.2 to 0.75. When the width W is, for example, 1.0 to 1.8 mm, the height H may be 0.2 to 0.65 mm. When the width W is, for example, 1.3 to 1.8 mm, the height H may be 0.35 to 0.7 mm. These values may be appropriately set according to the diameter of the spacer expander 110A, the strength of the material, the pitch of the ear portion, and the like.

As described above, since the value of W/H is 1.5 or more (the ear portion 105 is relatively flat), the height of the ear portion is suppressed as compared with the width of the ear portion, so that the mechanical strength of the ear portion of the spacer expander 110A can be increased. Therefore, even if the spacer expander 110A receives external force along with the reciprocating motion of the piston, the tension of the spacer expander 110A can be stably transmitted to the side rails 101 and 102, and the posture of each of the side rails 101 and 102 supported by the spacer expander 110A can be maintained in a stable state. As a result, oil scraping performance by the side rails 101 and 102 is stabilized, and as a result, an oil consumption amount is also stabilized. In the case of a manufacturing method in which the spacer expander 110A is obtained by plastically deforming a plate material or a wire material, the volume of a shape change by plastic deformation increases as the height of the ear portion 105 increases and, as such, manufacturing difficulty increases. However, since the height of the ear portion 105 is suppressed as compared with the width of the ear portion 105, such manufacturing difficulty is lower than that of the conventional spacer expander.

As described above, the height H of the ear portion 105 is a height difference between the highest position of a region adjacent to the ear portion 105 in the rail facing portion 107 and the highest position of the ear portion 105. A search range of the "highest position" in the rail facing portion 107 is within a range of the region adjacent to the ear portion 105 in the rail facing portion 107. FIG. 25(a) illustrates how to obtain the height difference (the height H of the ear portion 105) between the highest position of the region adjacent to the ear portion 105 in the rail facing portion 107 of the spacer expander 110A and the highest position of the ear portion 105. FIGS. 25(b) to 25(f) show how to obtain the height H of the ear portion 105 of the spacer expander described later. In any drawing, a straight line passing through the highest position of the ear portion 105 is defined as $h2$, and a straight line passing through the highest position of the region adjacent to the ear portion in the rail facing portion 107 is defined as $h1$. Each of the straight lines $h1$ and $h2$ is a straight line parallel to the tangential direction of the spacer expander 110A at each crest portion.

As in a third example to be described later, in a case where a convex portion (flat portion 107c) abutting on the side rail side surface is provided at the outer peripheral end away from the ear portion 105, a place having the highest position in a region other than the convex portion is searched in the rail facing portion 107. In this case, in a method of searching for the highest position in the rail facing portion 107, a position closest to an envelope in the region adjacent to the ear portion 105 of the rail facing portion 107 is set as the highest position based on the envelope obtained by connecting the highest positions of the respective ear portions 105 in the plurality of crest portions to a substantially straight line.

As illustrated in FIG. 16, the rail facing portion 107 is formed of a flat surface. The side rails 101 and 102 abut on the flat surface, whereby the side rails 101 add 102 are supported.

<Second Example>

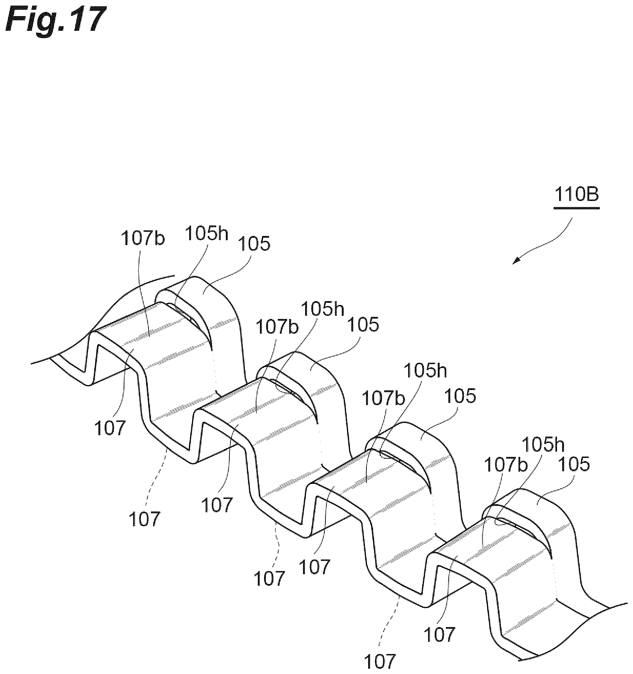

A spacer expander 110B has the same configuration as that of the spacer expander 110A except that the rail facing portion 107 has a raised portion 107b formed to extend in the radial direction instead of having a flat surface (refer to FIG. 17). Since the rail facing portion 107 has the raised portion 107b, it is possible to sufficiently suppress engine oil and foreign substances contained in the engine oil from staying on the surface of the rail facing portion 107, and it is possible to sufficiently suppress fixing between the rail facing portion 107 and the side rail 101. The raised portion 107b extends to the end portion on the outer peripheral side of the spacer expander 110B.

<Third Example>

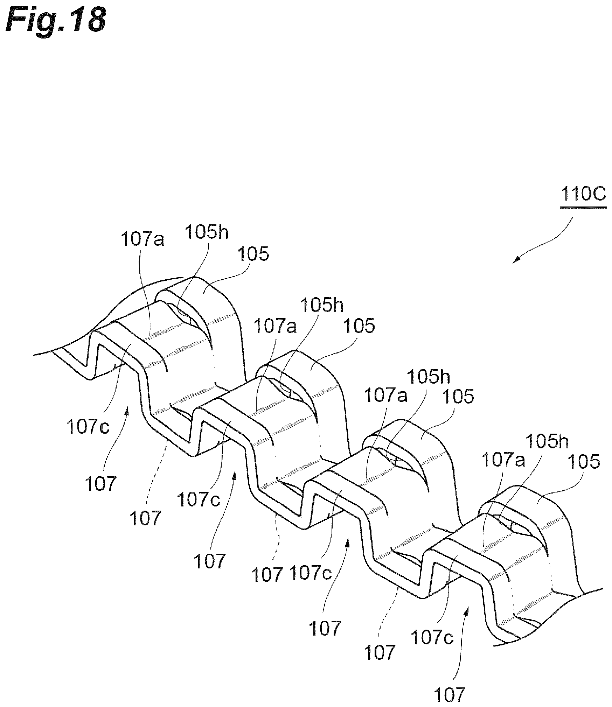

A spacer expander 110C has the same configuration as that of the spacer expander 110A except that the rail facing portion 107 has a flat portion 107c on the outer peripheral side instead of having a flat surface, and has a recess 107a formed to extend in the radial direction between the ear portion 105 and the flat portion 107c (refer to FIG. 18). By adopting such a configuration, it is possible to prevent accumulation of combustion products such as sludge between the rail facing portion 107 and the side rails 101 and 102. This also contributes to suppression of sticking. The depth of the recess 107a (height difference between the highest position of the rail facing portion 107 and the lowest position of the recess 107a) is, for example, 50 to 500 $\mu$m. The flat portion 107c is formed along an edge portion on the outer peripheral side of the spacer expander 110C. By forming the height of the flat portion 107c lower than the ear portion 105 and higher than the other portion of the rail facing portion 107, a gap is formed between the other portion of the rail facing portion 107 and the side rail 101 in a state in which the side rail 101 abuts on the flat portion 107c. The flat portion 107c is also referred to as a "protrusion", and a region (a portion connecting the ear portion 105 to the flat portion 107c) other than the flat portion 107c in the rail facing portion 107 is also referred to as a "center portion". Since the rail facing portion 107 has the flat portion 107c, a space is formed between the side surfaces 101d and 102c of the side rails 101 and 102 and the spacer expander 110C, and oil scraped off from a cylinder bore by the side rails 101 and 102 is scraped off between the ear portion 105 and the rail facing portion 107, so that it is possible to allow oil to efficiently flow to the inner peripheral side of the spacer expander 110C.

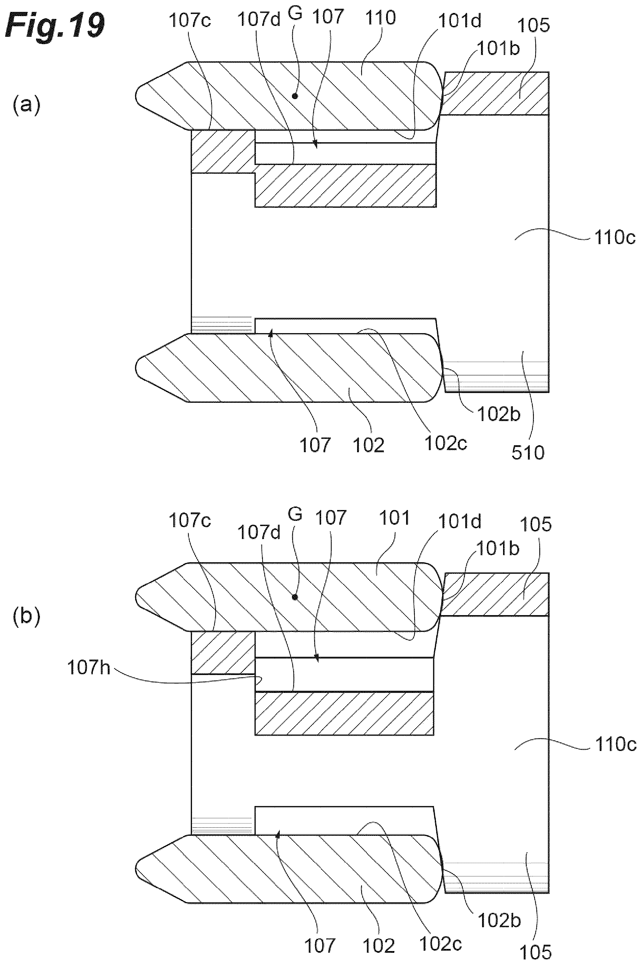

FIGS. 19(a) and 19(b) are cross-sectional views of the spacer expander 110C illustrated in FIG. 18 and the side rails 101 and 102 installed thereon, and illustrate different aspects. In any aspect, a step is provided in the flat portion 107c and the other region 7d (center portion) in the rail facing portion 107. In the aspect shown in FIG. 19(a), in the rail facing portion 107, the flat portion 107c and the other region 7d are not cut, and the two members are continuous. That is, no through hole is formed in this portion. On the other hand, in the aspect shown in FIG. 19(b), in the rail facing portion 107, a portion between the flat portion 107c and the other region 7d is cut, and a through hole 7h is formed in this portion. The through hole 7h may or may not be formed, but when used in an environment where foreign substances are likely to exist as in a diesel engine, the through hole 7h may be blocked by the foreign substances, and a degree of aged deterioration of tension may increase by providing the through hole 7h. When there are these concerns due to the environment of the internal combustion engine, a spacer expander in which the through hole 7h is not formed may be used as illustrated in FIG. 19(a). On the other hand, by providing the through hole 7h, there are many chances that oil scraped off from a cylinder bore can efficiently flow to the inner peripheral side of the spacer expander 110C. It is noted that the through hole 7h may be formed by, for example, the deepest portion of the recess 107a and the flat portion 107c.

In the cross section illustrated in FIGS. 19(a) and 19(b), the center of gravity G of each of the side rails 101 and 102 may be located inside the flat portion 107c. By adopting such a configuration, the behavior of the side rails 101 and 102 during high-speed operation can be stabilized, whereby an increase in an oil consumption amount can be more effectively suppressed.

<Fourth Example>

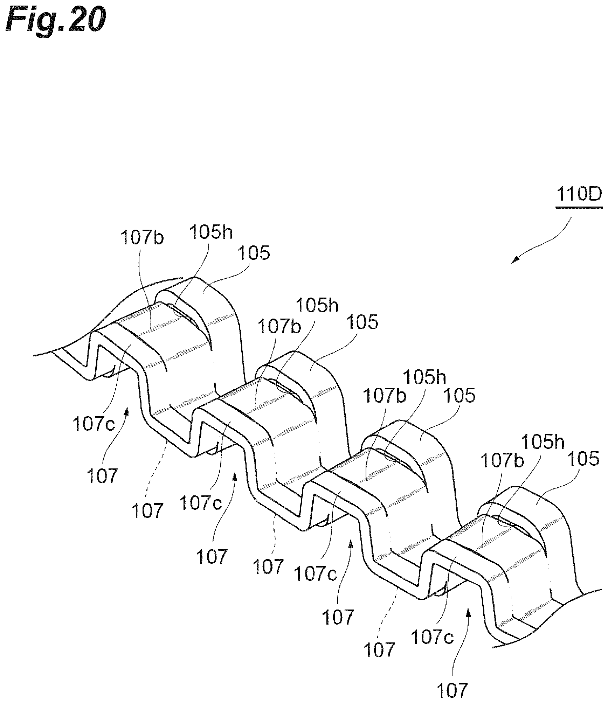

A spacer expander 110D has the same configuration as that of the spacer expander 110A except that the rail facing portion 107 has a flat portion 107c on the outer peripheral side instead of having a flat surface, and has a raised portion 107b formed to extend in the radial direction between the ear portion 105 and the flat portion 107c (refer to FIG. 20). The flat portion 107c is formed along an edge portion on the outer peripheral side of the spacer expander 110D. In a state in which the side rails 101 and 102 are combined with the spacer expander 110D, the inner peripheral surfaces 101b and 102b of the side rails 101 and 102 respectively abut on the ear portions 105, and the side surfaces 101d and 102c of the side rails 101 and 102 face the flat portion 107c of the rail facing portion 107, so that the flat portion 107c is formed to be lower than the ear portion 105.

<Fifth Example>

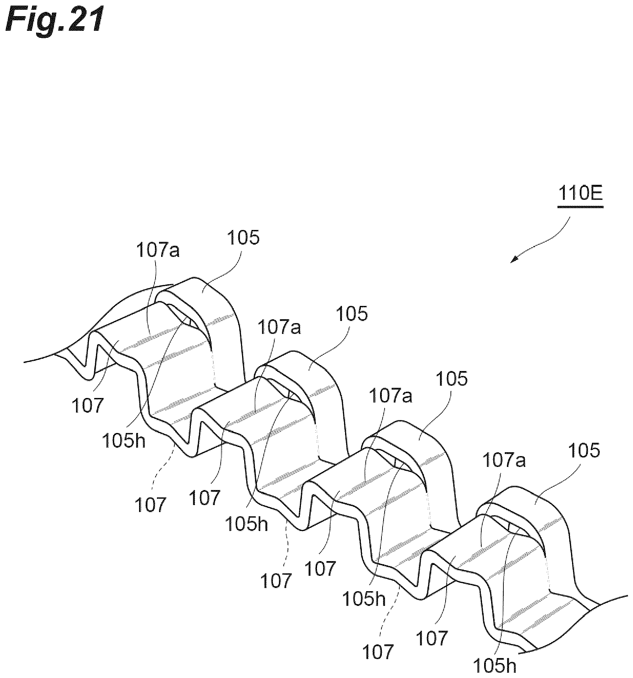

A spacer expander 110E has the same configuration as that of the spacer expander 110A except that the rail facing portion 107 has a recess 107a extending in the radial direction instead of having a flat surface (refer to FIG. 21). The recess 107a extends to the end portion on the outer peripheral side of the spacer expander 110E. The spacer expander 110E having such a configuration has an advantage that processing by plastic deformation is easier than the above-described spacer expander.

<Sixth Example>

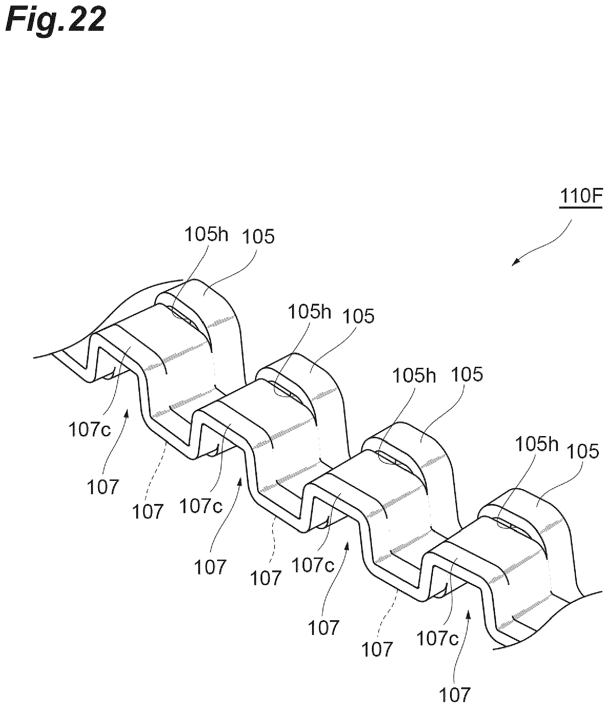

A spacer expander 110F has the same configuration as that of the spacer expander 110A except that the rail facing portion 107 has a flat portion 107c on the outer peripheral side instead of having a flat surface (refer to FIG. 22). The spacer expander 110F having such a configuration has an advantage that processing performed by plastic deformation is easily performed, similarly to the spacer expander of the above-described sixth example.

The spacer expander is not limited to the spacer expanders of the above-described examples. For example, in the above-described examples, a case in which the surface of the ear portion 105 on which the inner peripheral surface 101b of the side rail 101 abuts is flat has been described, but the surface of the ear portion 105 on which the inner peripheral surface 101b abuts may have a plurality of convex portions 105b extending in the thickness direction of the spacer expander (the height direction of the ear portion 105). These convex portions 105b may be formed so as to be aligned in the width direction of the ear portion 105.

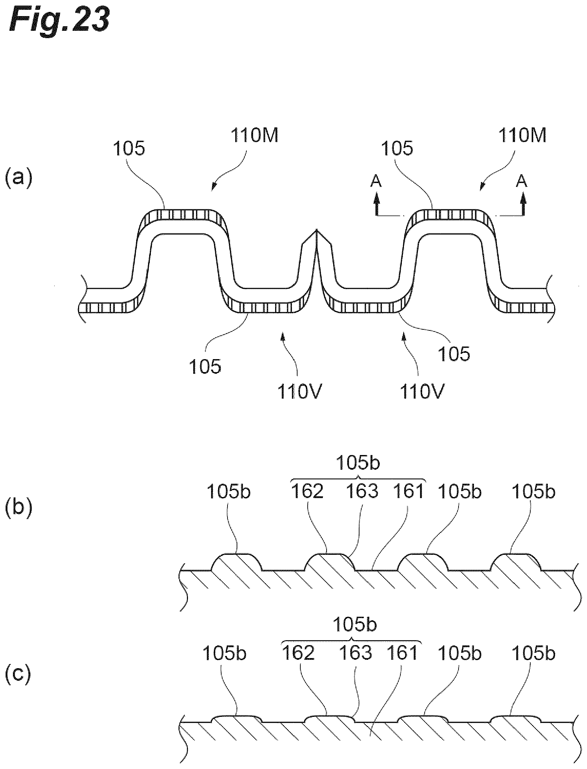

FIG. 23(a) is a view of the spacer expander as viewed from the outer peripheral side, and the spacer expander has a wave shape (a crest portion and a valley portion) in the axial direction, and the ear portion 105 of the crest portion 110M that presses one side rail 101 and the ear portion 105 of the valley portion 110V that presses the other side rail 102 are formed. The ear portion 105 is formed with a concave-and-convex portion having a circumferentially concave-and-convex shape in which the concave portion and the convex portion extend in the substantially axial direction. The single rotation of the side rail can be prevented by reducing a contact area of the convex surface and increasing contact surface pressure. FIGS. 23(b) and 23(c) are cross-sectional views taken along line A-A in FIG. 23(a), FIG. 23(b) is a cross-sectional view illustrating an aspect in which the convex portion is high, and FIG. 23(c) is a cross-sectional view illustrating an aspect in which the convex portion is low. As shown in these drawings, the convex portion 105b is formed so as to protrude from a concave surface 161, and includes a convex surface 162 and side surfaces 163 each connecting the convex surface 162 to the concave surface 161.

In one ear portion 105, at least five (for example, seven) convex portions 105b may be formed so as to be aligned in the width direction of the ear portion 105. The convex portion 105b is formed, for example, by forming a concave portion by cutting a portion between two adjacent convex portions 105b.

In each of the above examples, it is assumed that all the ear portions 105 and the rail facing portions 107 have substantially the same shape, but they do not necessarily have substantially the same shape. Among the plurality of ear portions 105 formed on one side surface side of the spacer expander, all the ear portions 105 may not satisfy the condition represented by the inequality (1) or the inequality (2). For example, at least half of the plurality of ear portions 105 formed on one surface side may satisfy the condition represented by the inequality (1) or the inequality (2).

In recent years, an internal combustion engine typified by an automobile engine has been intended to achieve higher output, higher fuel efficiency, and lower emission from the viewpoint of environmental protection. Accordingly, conditions under which the oil control ring is used are becoming more severe. For example, from the viewpoint of higher output, the rotation speed of an engine tends to be higher than that in the related art, and the oil control ring reciprocates in a cylinder bore at a higher speed. As a result, the ear portion is easily worn by contact with the side rail. When the contact surface of the ear portion with the side rail wears, the surface pressure of the side rail with respect to the inner wall of the cylinder bore decreases and, as such, oil scraping performance deteriorates. From the viewpoint of improving fuel efficiency, there is a tendency to use engine oil having more excellent lubricity, and a phenomenon in which the relative positions of the side rail and the spacer expander are shifted in the circumferential direction easily occurs. This also causes wear of the ear portion due to the side rail and deterioration in oil scraping performance.

According to an evaluation test related to the present disclosure described above, it has been found that a spacer expander having an ear portion having a W/H value of 1.5 or more can suppress a wear amount of the ear portion as compared with a spacer expander having a W/H value of 1.5 or less. Since a dimension ratio of the height of the ear portion to the width of the ear portion is limited, strength and workability of the ear portion are improved. An upper limit value of the value of W/H is, for example, 5.0 from the viewpoint of tension generated in the spacer expander. That is, with the spacer expanders 110A to 110F and the oil control ring to which the spacer expanders are applied, it is possible to suppress wear of the ear portion due to contact with the side rail.

As described above, the oil control ring according to the present disclosure can sufficiently suppress wear of the ear portion. Accordingly, the oil control ring can be applied to a diesel engine. The conventional 3-piece oil control ring is widely applied to a gasoline engine, but is not generally applied to a diesel engine because wear resistance of the ear portion is insufficient. This is because a diesel engine is lubricated in a state in which a large number of hard particles such as carbon generated during combustion is contained in engine oil, so that wear of each portion is remarkable as compared with a gasoline engine, and the ear portion of the spacer expander is also worn relatively early, which causes deterioration in oil scraping performance.

Furthermore, when the spacer expanders 110A to 110F are used in combination with the above-described piston ring 1, it is possible to configure a piston ring set including the piston ring 1, the spacer expanders 110A to 110F, and an oil control ring to which the spacer expanders are applied. With such a piston ring set, the piston ring 1 promotes a reduction in friction loss due to conformable sliding at the initial stage of starting use of the piston ring 1. Therefore, the minute wedge-shaped space is easily formed. As a result, it is possible to further reduce friction at the initial stage of starting use of the piston ring 1. In addition to this action effect, the spacer expanders 110A to 110F suppress abrasion of the ear portion due to contact with the side rail, thereby making it possible to suppress deterioration in oil scraping performance. Therefore, for example, it is possible to suppress a degree of causing the piston ring 1 to share a function of suppressing deterioration in oil scraping performance in the medium to long term, and the piston ring 1 can be configured to further reduce friction at the initial stage of starting use of the piston ring 1.

**Reference Signs List**

1, 1A PISTON RING
101, 102, 103 SIDE RAIL
2 MAIN BODY PORTION
2a SIDE SURFACE (ONE SIDE SURFACE)
2b SIDE SURFACE (THE OTHER SIDE SURFACE)
2c, 3c, 101b, 102b, 103b INNER PERIPHERAL SURFACE
2d, 101a, 102a OUTER PERIPHERAL SURFACE
2e INNER CUT SURFACE
21 FIRST CURVED SURFACE
21a FIRST BOUNDARY
21b FIRST VIRTUAL LINE
22 SECOND CURVED SURFACE
22a SECOND BOUNDARY
22b SECOND VIRTUAL LINE
23 INTERMEDIATE SURFACE
101g, 103g INNER TIP PORTION
105 EAR PORTION
107 RAIL FACING PORTION
110A to 110F SPACER EXPANDER
150 OIL CONTROL RING
A WIDTH DIRECTION (DIRECTION)

**Claims**

1. A piston ring comprising an annular main body portion having an inner peripheral surface, an outer peripheral surface, and one side surface and the other side surface substantially orthogonal to the inner peripheral surface, the piston ring comprising:

   a first curved surface provided on a side of the one side surface of the outer peripheral surface, the first curved surface being convexly curved outwards in a radial direction of the main body portion;
   a second curved surface provided on a side of the other side surface of the outer peripheral surface, the second curved surface being convexly curved outwards in the radial direction of the main body portion; and

an intermediate surface formed to extend in a direction connecting the one side surface to the other side surface so as to connect the first curved surface to the second curved surface, wherein

the intermediate surface has a flat portion formed in at least a part thereof, and

a width of the intermediate surface in the direction is 0.05 mm or more and 0.30 mm or less.

2. The piston ring according to claim 1, wherein the flat portion has a width dimension of 50% or more of the width of the intermediate surface in the direction.

3. The piston ring according to claim 1 or 2, wherein at least one of a first wedge angle and a second wedge angle is 1.5° or less, the first wedge angle being an angle formed between the intermediate surface and a first virtual line in contact with the first curved surface at a first boundary between the first curved surface and the intermediate surface, and the second wedge angle being an angle formed between the intermediate surface and a second virtual line in contact with the second curved surface at a second boundary between the second curved surface and the intermediate surface.

4. The piston ring according to any one of claims 1 to 3, wherein an outermost portion of the intermediate surface, the outermost portion being located at an outermost side in the radial direction, is disposed closer to the side of the one side surface than a center portion of the intermediate surface in the direction.

5. The piston ring according to any one of claims 1 to 3, wherein an outermost portion of the intermediate surface, the outermost portion being located at an outermost side in the radial direction, is disposed closer to the side of the other side surface than a center portion of the intermediate surface in the direction.

6. The piston ring according to any one of claims 1 to 5, further comprising an inner cut surface extending obliquely relative to the direction so as to connect the one side surface to the inner peripheral surface.

7. The piston ring according to claim 6, wherein a torsion angle of the piston ring in a predetermined cylinder mounting state is 5 to 90 arcminute.

8. A piston ring set comprising:

the piston ring according to any one of claims 1 to 7; and
an oil control ring including a pair of side rails and a spacer expander disposed between the pair of side rails, wherein

the side rail has
an outer peripheral surface, an inner peripheral surface, a first side surface, and a second side surface,
the inner peripheral surface has a vertically symmetrical shape in a cross section in an axial direction, and
the inner peripheral surface of the side rail has an inner tip portion satisfying a following condition A1 in the cross section in the axial direction:

$$\text{condition A1: } 0.7 \leq R1/Lh0 \leq 1.1$$

in a formula, R1 represents a radius of curvature (unit: mm) of a curve forming the inner tip portion, and Lh0 represents a height (unit: mm) of the side rail.

9. The piston ring set according to claim 8, wherein

the spacer expander includes a plurality of ear portions and a plurality of rail facing portions, the ear portions abutting on the inner peripheral surface of the side rail, each of the rail facing portions being provided adjacent to a corresponding one of the ear portions and facing the side surface of the side rail, and
all or at least a part of the plurality of ear portions satisfy a following condition B1:

$$\text{condition B1: } W/H \geq 1.5$$

in a formula, W represents a width (unit: mm) of each of the ear portions at a position moved by 0.05 mm from a highest position of each of the ear portions in a direction of a corresponding one of the rail facing portions, and H represents a height difference (unit: mm) between a highest position of a region in each of the rail facing portions, the region being adjacent to the corresponding one of the ear portions, and the highest position of each of the ear portions.

EP 4 435 298 A1

*Fig.1*

# Fig.2

*Fig.3*

# Fig.4

| No. | INTERMEDIATE SURFACE WIDTH | WEDGE ANGLE |
|---|---|---|
| No.1 | 0.027 | 0.695 |
| No.2 | 0.107 | 1.035 |
| No.3 | 0.221 | 1.43 |
| No.4 | 0.271 | 1.53 |
| No.5 | 0.278 | 1.585 |
| No.6 | 0.359 | 1.665 |
| No.7 | 0.071 | 0.84 |
| No.8 | 0.092 | 0.94 |
| No.9 | 0.163 | 0.86 |
| No.10 | 0.237 | 1.1 |
| No.11 | 0.321 | 1.145 |
| No.12 | 0.337 | 1.465 |

*Fig.5*

# Fig.6

# *Fig.7*

| No. | WIDTH [mm] | INTERMEDIATE SURFACE WIDTH [mm] | INTERMEDIATE SURFACE WIDTH [%] | WEDGE ANGLE [deg.] | FRICTION [W] |
|---|---|---|---|---|---|
| FIRST EXAMPLE | 1 | 0.078 | 8% | 0.92 | 6.3 |
| SECOND EXAMPLE | 1 | 0.100 | 10% | 0.93 | 6.4 |
| THIRD EXAMPLE | 1 | 0.150 | 15% | 0.95 | 6.5 |
| FOURTH EXAMPLE | 1 | 0.249 | 25% | 1.20 | 6.7 |
| FIFTH EXAMPLE | 1 | 0.050 | 5% | 0.70 | 6.8 |
| SIXTH EXAMPLE | 1 | 0.277 | 28% | 1.27 | 7.4 |
| SEVENTH EXAMPLE | 1 | 0.131 | 13% | 0.93 | 6.5 |
| EIGHTH EXAMPLE | 1 | 0.110 | 11% | 0.93 | 6.5 |
| NINTH EXAMPLE | 1 | 0.093 | 9% | 0.95 | 6.5 |
| TENTH EXAMPLE | 1 | 0.086 | 9% | 0.90 | 6.3 |
| ELEVENTH EXAMPLE | 1 | 0.230 | 23% | 1.10 | 7.0 |
| TWELFTH EXAMPLE | 1 | 0.140 | 14% | 0.94 | 6.5 |
| THIRTEENTH EXAMPLE | 1 | 0.217 | 22% | 1.05 | 7.0 |
| FOURTEENTH EXAMPLE | 1 | 0.195 | 20% | 0.99 | 6.8 |
| FIFTEENTH EXAMPLE | 1 | 0.184 | 18% | 0.97 | 6.8 |
| SIXTEENTH EXAMPLE | 1 | 0.175 | 18% | 0.95 | 6.7 |
| SEVENTEENTH EXAMPLE | 1 | 0.202 | 20% | 1.00 | 7.0 |
| EIGHTEENTH EXAMPLE | 1 | 0.212 | 21% | 0.99 | 7.0 |
| NINETEENTH EXAMPLE | 1 | 0.224 | 22% | 1.05 | 7.1 |
| TWENTIETH EXAMPLE | 1 | 0.160 | 16% | 0.95 | 6.6 |
| TWENTY-FIRST EXAMPLE | 1 | 0.284 | 28% | 1.40 | 7.5 |
| TWENTY-SECOND EXAMPLE | 1 | 0.235 | 24% | 1.15 | 7.0 |
| TWENTY-THIRD EXAMPLE | 1 | 0.250 | 25% | 1.19 | 7.1 |
| TWENTY-FOURTH EXAMPLE | 1 | 0.276 | 28% | 1.38 | 7.4 |
| TWENTY-FIFTH EXAMPLE | 1 | 0.261 | 26% | 1.23 | 7.3 |
| TWENTY-SIXTH EXAMPLE | 1 | 0.279 | 28% | 1.33 | 7.4 |
| TWENTY-SEVENTH EXAMPLE | 1 | 0.275 | 28% | 1.30 | 7.4 |
| TWENTY-EIGHTH EXAMPLE | 1 | 0.244 | 24% | 1.19 | 7.1 |
| TWENTY-NINTH EXAMPLE | 1 | 0.261 | 26% | 1.21 | 7.3 |
| THIRTIETH EXAMPLE | 1 | 0.264 | 26% | 1.25 | 7.3 |
| FIRST COMPARATIVE EXAMPLE | 1 | — | — | — | 13.5 |
| SECOND COMPARATIVE EXAMPLE | 1 | 0.316 | 32% | 1.56 | 8.2 |

# *Fig.8*

(a)

(b)

Fig.9

# Fig.10

# *Fig.11*

(a)

(b)

*Fig.12*

## Fig.13

# Fig.14

**Fig.15**

110A

110c

110a 110b

## Fig.16

# Fig.17

*Fig.18*

**Fig.19**

(a)

(b)

# Fig.20

# Fig.21

110E

105

**Fig.22**

# Fig.23

(a)

(b)

(c)

# *Fig.24*

(a)

(b)

# Fig.25

(a)

(b)

(c)

(d)

(e)

(f)

<center>**INTERNATIONAL SEARCH REPORT**</center>

| | International application No. |
|---|---|
| | **PCT/JP2022/046957** |

**A. CLASSIFICATION OF SUBJECT MATTER**

*F16J 9/20*(2006.01)i; *F02F 5/00*(2006.01)i; *F16J 9/06*(2006.01)i
FI: F16J9/20; F16J9/06 B; F02F5/00 R; F02F5/00 301E; F02F5/00 C

According to International Patent Classification (IPC) or to both national classification and IPC

**B. FIELDS SEARCHED**

Minimum documentation searched (classification system followed by classification symbols)

F16J9/20; F02F5/00; F16J9/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)



**C. DOCUMENTS CONSIDERED TO BE RELEVANT**

| Category* | Citation of document, with indication, where appropriate, of the relevant passages | Relevant to claim No. |
|---|---|---|
| X | JP 2002-323133 A (TEIKOKU PISTON RING CO LTD) 08 November 2002 (2002-11-08) claim 1, paragraphs [0005]-[0006], [0020]-[0029], fig. 1, 2, 5 | 1-6 |
| Y | paragraph [0028], fig. 5 | 6-7 |
| A | claim 1, paragraphs [0005]-[0006], [0020]-[0029], fig. 1, 2, 5 | 8-9 |
| Y | CD-ROM of the specification and drawings annexed to the request of Japanese Utility Model Application No. 63594/1991 (Laid-open No. 14733/1993) (RIKEN KK) 26 February 1993 (1993-02-26), claims 2, 3, paragraphs [0006]-[0008], fig. 1 | 1-7 |
| A | claims 2, 3, paragraphs [0006]-[0008], fig. 1 | 8-9 |
| Y | Microfilm of the specification and drawings annexed to the request of Japanese Utility Model Application No. 102914/1987 (Laid-open No. 8553/1989) (RIKEN KK) 18 January 1989 (1989-01-18), claim 2, table 2 | 1-7 |
| A | claim 2, table 2 | 8-9 |
| Y | JP 2017-26054 A (RIKEN KK) 02 February 2017 (2017-02-02) claim 1, fig. 1-3, 7 | 6-7 |
| A | claim 1, fig. 1-3, 7 | 8-9 |

☑ Further documents are listed in the continuation of Box C.       ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

<center>43</center>

**INTERNATIONAL SEARCH REPORT**

International application No.

**PCT/JP2022/046957**

**C.    DOCUMENTS CONSIDERED TO BE RELEVANT**

| Category* | Citation of document, with indication, where appropriate, of the relevant passages | Relevant to claim No. |
|---|---|---|
| Y | JP 2006-336744 A (TOYOTA MOTOR CORP) 14 December 2006 (2006-12-14) paragraphs [0036]-[0038] | 7 |
| A | paragraphs [0036]-[0038] | 8-9 |
| A | WO 2019/194104 A1 (RIKEN KK) 10 October 2019 (2019-10-10) claim 1 | 9 |
| A | JP 4165119 B2 (NISSAN MOTOR CO LTD) 15 October 2008 (2008-10-15) claim 1, paragraph [0030], fig. 10 | 1-9 |
| A | Microfilm of the specification and drawings annexed to the request of Japanese Utility Model Application No. 055854/1977 (Laid-open No. 150308/1978) (HONDA MOTOR CO LTD) 27 November 1978 (1978-11-27), specification, p. 3, line 9 to p. 4, line 5, fig. 2 | 1-9 |
| A | JP 2021-1612 A (TPR CO LTD) 07 January 2021 (2021-01-07) paragraph [0033], fig. 1-3 | 1-9 |
| P, Y | WO 2022/209592 A1 (RIKEN KK) 06 October 2022 (2022-10-06) claim 1 | 8-9 |

Form PCT/ISA/210 (second sheet) (January 2015)

INTERNATIONAL SEARCH REPORT
Information on patent family members

International application No.

**PCT/JP2022/046957**

| Patent document cited in search report | | | Publication date (day/month/year) | Patent family member(s) | | | Publication date (day/month/year) |
|---|---|---|---|---|---|---|---|
| JP | 2002-323133 | A | 08 November 2002 | (Family: none) | | | |
| JP | 5-14733 | U1 | 26 February 1993 | (Family: none) | | | |
| JP | 64-8553 | U1 | 18 January 1989 | (Family: none) | | | |
| JP | 2017-26054 | A | 02 February 2017 | (Family: none) | | | |
| JP | 2006-336744 | A | 14 December 2006 | (Family: none) | | | |
| WO | 2019/194104 | A1 | 10 October 2019 | US claim 1 EP CN | 2021/0164566 3779244 112204275 | A1 A1 A | |
| JP | 4165119 | B2 | 15 October 2008 | (Family: none) | | | |
| JP | 53-150308 | U1 | 27 November 1978 | (Family: none) | | | |
| JP | 2021-1612 | A | 07 January 2021 | (Family: none) | | | |
| WO | 2022/209592 | A1 | 06 October 2022 | JP claim 1 | 7116861 | B1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06011038 A